Europäisches Patentamt

European Patent Office

Office européen des brevets

(19)

(11) Numéro de publication : **0 022 713**
**B1**

(12) **FASCICULE DE BREVET EUROPÉEN**

(45) Date de publication du fascicule du brevet :
30.03.83

(51) Int. Cl.³ : **H 04 N   7/13**

(21) Numéro de dépôt : **80401030.4**

(22) Date de dépôt : **08.07.80**

(54) **Installation de codage et de décodage d'un signal visiophonique numérique.**

(30) Priorité : **09.07.79 FR 7917798**

(43) Date de publication de la demande :
**21.01.81 Bulletin 81/03**

(45) Mention de la délivrance du brevet :
**30.03.83 Bulletin 83/13**

(84) Etats contractants désignés :
**BE DE GB IT NL**

(56) Documents cités :
**GB A 2 003 001**
**US A 3 940 555**
**US A 4 027 331**

**FREQUENZ, vol. 33, no. 1, janvier 1979 Berlin DE**
**BOSTELMANN : « Ein Codec für Bildfernsprech-**
**signale mit subjectiv optimiertem Bewegungsde-**
**tektor », pages 2-8**
**THE BELL SYSTEM TECHNICAL JOURNAL vol.**
**54, no. 8, octobre 1975 New York US HASKELL :**
**« A Low-Bit-Rate Interframe Coder for Videotele-**
**phone » pages 1475-1495.**
**THE BELL SYSTEM TECHNICAL JOURNAL vol.**
**50, no. 6, juillet-août 1971 New York US CANDY :**
**« Transmitting Television as Clusters of Frame to**
**Frame differences » pages 1889-1917**

(73) Titulaire : **Temime, Jean Pierre**
**216, Avenue Aristide Briand**
**F-92220 Bagneux (FR)**

(72) Inventeur : **Temime, Jean Pierre**
**216, Avenue Aristide Briand**
**F-92220 Bagneux (FR)**

(74) Mandataire : **Martinet, René et al**
**Cabinet Martinet 62, rue des Mathurins**
**F-75008 Paris (FR)**

# 0 022 713

## Installation de codage et de décodage d'un signal visiophonique numérique

La présente invention concerne une installation de transmission vidéo incluant un dispositif de codage d'un signal visiophonique numérique à un débit élevé donné, constitué de mots d'un nombre de bits prédéterminé représentatifs des points consécutifs d'une image analysée, en un signal codé MIC transmis sur une voie numérique à débit faible convoyant des mots représentatifs de points d'image dont les niveaux ont varié, relativement à ceux correspondants de l'image précédente, ledit dispositif de codage comprenant une mémoire d'image, des moyens pour détecter, par comparaison de la différence des mots de deux points correspondants d'une image et de l'image précédente mémorisée à un seuil prédéterminé, le mouvement de l'image par rapport à l'image précédente mémorisée, un prédicteur linéaire dont l'entrée est reliée à la mémoire d'image, des moyens commandés par les moyens de détection de mouvement pour sélectionner tout ou partie des points variables, des moyens recevant en synchronisme les mots de point du signal visiophonique et les mots prédits par le prédicteur pour coder, selon une loi de quantification prédéterminée, les mots en code MICD représentatifs de tout ou partie des points variables afin de multiplexer les mots en code MICD dans ladite voie numérique, et des moyens pour interpoler linéairement les mots des autres points non sélectionnés de l'image à partir de mots transmis afin de mémoriser les mots de points correspondant aux mots codés, et les mots interpolés dans la mémoire d'image. L'invention a trait également au dispositif de décodage de l'installation qui décode le signal MIC codé par le dispositif de codage, transmis par l'intermédiaire de la voie numérique.

Il est connu que, dans la partie émission d'une installation visiophonique relative à un locuteur, le signal visiophonique est transmis par la caméra associée à un moniteur, à travers des moyens de conversion analogique-numérique, sous forme numérique MIC à un débit élevé, par exemple de l'ordre de 16 à 18 Mbits/s selon le standard visiophonique adopté. Chaque mot représentatif d'un point d'une ligne de l'image comporte 8 bits, ce qui correspond à 256 niveaux de quantification entre le blanc et le noir. Après codage différentiel MICD dans le dispositif de codage de la partie émission, le signal visiophonique numérique est transmis sur une voie numérique à un débit faible de l'ordre de 2 Mbits/s. Il apparaît ainsi une réduction de débit d'un rapport 8 environ correspondant à une transmission d'un bit par point en moyenne. Cependant, pour obtenir une reconstitution convenable de l'image dans le dispositif de décodage de la partie de réception du locuteur distant, il est nécessaire de transmettre un minimum de 3 bits par point de l'image, ce qui impose que le dispositif de codage comprenne des moyens pour sélectionner certains points de l'image en vue de ne transmettre que ceux-ci après codage en code MICD et qu'au moins le dispositif de décodage comprenne des moyens d'interpolation des points non transmis en fonction des points transmis et décodés en vue de reconstituer l'image complète.

On notera, à cet égard, que le domaine de la présente invention ne concerne pas les installations de codage et de décodage dans lesquelles n'est effectuée qu'une simple compression de l'information à transmettre. Tous les points images initiaux sont retransmis sous forme de mots en code MIC différentiel qui ont chacun un nombre de bits prédéterminé (par exemple égal à trois) et qui ont un débit sortant de l'ordre de grandeur du rapport entre le débit entrant et le nombre de bits prédéterminé (se reporter par exemple à la demande de brevet britannique publiée 2.003.001).

Afin de résoudre le problème ci-dessus, on a d'abord proposé des dispositifs de codage dits à rafraîchissement systématique, tels que décrits, par exemple, dans le paragraphe II de l'article de M. Devimeux, M. Jolivet et J. P. Temime publié dans les Journées d'Etudes du 30 novembre et 1er décembre 1977 de la Société Française des Electriciens, Electroniciens et Radioélectriciens à Rennes. Le codage à rafraîchissement systématique consiste à transmettre un nombre constant de bits informatifs alloués à un nombre limité de points par images successives, généralement à une trame sur trois de l'image codée à 3 bits/point. Dans ce cas, le dispositif de codage transmet sur la voie numérique tous les mots de point à 3 bits en code MICD relatifs à une trame sur trois. Dans la partie réception, le dispositif de décodage reconstitue les paires de trames manquantes par interpolation entre les trames adjacentes transmises. Pour ce faire, il comporte une mémoire tampon de trame lue à la fréquence des points de l'image. Une telle installation de codage et de décodage présente notamment des pertes de résolutions temporelle et spatiale et un effet de saccades très marqué, notamment dans le cas de déplacements considérables de la zone mobile de l'image (généralement le visage du locuteur) devant le fond fixe. Ces pertes sont dues aux faits que la fréquence des trames transmises est le tiers de la fréquence de trames réelles et que, corollairement, l'alternance des trames paires et impaires exige une interpolation des trames manquantes aussi bien temporelle que spatiale.

Les systèmes de codage et de décodage connus dits à rafraîchissement conditionnel sont plus performants, mais nettement plus complexes. Ils comportent un circuit de détection du mouvement de chaque image visiophonique en vue de commander les moyens de sélection à discriminer les points à transmettre et à coder ou non selon des critères internes. De tels systèmes à rafraîchissement conditionnel sont divulgués, entre autres, par les publications suivantes :

— article de M. Devimeux et consorts déjà cité, paragraphe III ;

— article de J. C. Candy, M. A. Franke, B. G. Haskell et F. W. Mounts paru dans le Bell system technical journal, Vol. 50, juillet-août 1971, New York, pages 1889 à 1917 ;

— article de R. C. Nicol, Conference on Digital Processing of Signals in Communication, Université

2

de Technologie de Loughborough, septembre 1977 ;

— article de B. G. Haskell et R. L. Schmidt paru dans Bell system Technical Journal, Vol. 50, n° 8, octobre 1975, pages 1475 à 1495 ;

— article de Von Gert Bostelmann paru dans Frequenz, Vol. 33, n° 1, janvier 1979, Berlin, pages 2 à 8 ; et

— brevet américain 4.027.331.

Les critères internes de discrimination dans le circuit de détection de mouvement sont fondés sur la détection des points de la partie visible de chaque image dont les amplitudes ou niveaux ont varié au moins d'un certain seuil, généralement variable en fonction des mots de point qu'il est possible de transmettre, par rapport à celles des points de l'image précédente reçue. Les parties « non mobiles » de l'image correspondant à des différences d'amplitude inférieures au seuil variable restent inchangées dans la mémoire d'image, à l'interpolation près. Par contre, les parties mobiles sont rafraîchies, c'est-à-dire remplissent la mémoire d'image à la place des parties correspondantes de l'image précédente. Il s'est avéré que de tels critères sont tout à fait convenables dans le cas de la visiophonie où les déplacements des zones mobiles de l'image sont relativement limités.

Le seuil de détection de mouvement diminue lorsque le nombre de points modifiés à coder et à transmettre augmente afin de permettre la reconstitution convenable dans le dispositif de décodage à la réception. On conçoit dès lors, que le codage doit être régulé afin d'adapter le nombre variable de points modifiés des images à coder au débit constant de la voie de transmission numérique. Cette régulation est réalisée par l'intermédiaire d'une mémoire tampon « élastique » dans laquelle les mots de points codés sélectionnés sont écrits en asynchronisme et sont lus en synchronisme au débit de la voie de transmission. Cette mémoire tampon ne devant jamais être ni vide ni pleine, son contenu permet de déterminer les paramètres de régulation du codeur de manière à ce que le débit moyen entrant dans la mémoire tampon soit égal au débit de la voie de transmission. En effet, le nombre de bits ou plus précisément des mots de point, généralement à 4 bits après codage MICD, est variable d'une image à l'autre. Pour chaque image sont ainsi transmis des mots MICD représentatifs des amplitudes des points variables ainsi que les mots d'adresse qui indiquent le début et la fin des plages (Cluster) de ces points variables. Lorsque la mémoire tampon est susceptible d'être saturée par des plages de points variables considérables, un sous-échantillonnage temporel d'une trame sur deux et/ou spatial d'un point sur deux pour chaque ligne intervient systématiquement (modes 1 et 2 selon l'article précité de Haskell et Schmidt). Selon le premier mode précédent, la trame manquante, par exemple paire, n'est pas transmise à l'émission et est remplacée à la réception par une trame résultant de l'interpolation à partir des deux trames adjacentes impaires, ce qui réduit la résolution verticale de l'image d'un facteur 2. Selon le second mode, les points non transmis sont reconstruits à la réception par interpolation à partir des points adjacents transmis.

De telles installations de codage et de décodage à rafraîchissement conditionnel présentent les inconvénients suivants :

— l'optimisation et la réalisation du dispositif de codage sont complexes à cause des différents modes de fonctionnement dépendant du remplissage de la mémoire tampon « élastique » et corollairement du mouvement ;

— multiplexage dans la voie numérique d'un nombre variable de mots informatifs de points et d'adresses de plages de points (Cluster) et, par suite, de durée variable ;

— en conséquence du nombre et de la durée variables des mots transmis pour chaque image, nécessité à la réception de moyens de resynchronisation par verrouillage variable sur les mots de synchronisation transmis et d'une mémoire tampon « élastique » analogue à celle de l'émission ;

— dans le cas de forts mouvements, diminution de la résolution temporelle ou spatiale par le sous-échantillonnage spatial ou temporel.

Afin d'éviter les problèmes d'interpolation selon le procédé à rafraîchissement conditionnel, le brevet américain 3.940.555 divulgue un procédé de codage selon lequel tous les mots de niveaux modifiés en code MICD qui sont représentatifs de points d'une image qui excèdent un seuil prédéterminé sont transmis et selon le nombre de bits affecté à chaque ligne du signal numérique à débit faible est constant. Le codage MICD est un codage intra-image et non inter-image. Chaque mot MICD indique la différence entre les niveaux d'un point d'une ligne verticale, horizontale ou diagonale de l'image avec le point correspondant d'une ligne adjacente de même type.

Le nombre de bits alloués à chaque ligne est composé d'un mot de synchronisation de ligne, d'un bit d'adressage pour chaque point de la ligne, dont l'état indique la présence ou l'absence d'une modification pour le point considéré, et des mots MICD de niveau des points qui ont varié. Le nombre de bits des mots MICD est toujours inférieur ou égal à un nombre maximal prédéterminé, par exemple égal à quatre, afin d'adapter le nombre de mots MICD à transmettre au nombre de bits prédéterminés affectés à chaque ligne.

Cependant, cette installation de codage et de décodage a l'inconvénient que, lorsque le nombre de points de la ligne dont les niveaux ont varié et sont par conséquent à transmettre est élevé, le nombre de bits affectés à chaque mot MICD transmis peut être réduit à l'unité. En effet, aucune interpolation et donc aucun sous-échantillonnage ne sont prévus, ce qui réduit considérablement la résolution spatiale de l'image. En fait, cette installation de codage et de décodage est applicable lorsque le rapport de réduction des débits sortant et entrant est relativement faible, de l'ordre de 1/4.

La présente invention a pour but de fournir des dispositifs de codage et de décodage du type défini dans l'entrée en matière, s'affranchissant notamment de la complexité des moyens de régulation, des mémoires tampons élastiques et des moyens de resynchronisation des systèmes à rafraîchissement conditionnel par le fait que la durée allouée à l'information des parties en mouvement sélectionnées à coder et à transmettre sur la voie numérique est constante pour chaque image, voire pour chaque ligne d'une image, indépendamment du nombre variable de points modifiés d'une image à la suivante. Ceci est réalisé par une interpolation et un sous-échantillonnage, si nécessaire, sans pour cela réduire les résolutions spatiale et temporelle de l'image reconstituée dans la partie réception. Le nombre de bits réservé à chaque ligne étant fixé une fois pour toutes, les informations relatives aux lignes sont transmises en synchronisme à la fréquence de ligne et les problèmes d'adressage de plages de points ou des points à transmettre sont également supprimés. Les qualités de l'image reconstituée à la réception sont tout-à-fait comparables à celles des systèmes à rafraîchissement conditionnel connus.

Conformément à l'invention, le dispositif de codage est caractérisé en ce que, le nombre de bits informatifs NB alloués à chaque ligne d'une image dans la voie numérique étant constant et le nombre de bits moyen alloués à chaque mot du signal codé d'une ligne étant plus grand ou égal à un premier nombre entier prédéterminé, les moyens de détection de mouvement produisent pour chaque ligne d'une image les coordonnées $x_1$, $x_2$ des deux points délimitant la zone mobile de l'image par rapport à la ligne correspondante de l'image précédente pour en déduire le nombre NP des points de la zone mobile de la ligne susceptible d'être codés et ledit nombre de bits moyen $\bar{B}$ et en ce que les moyens de sélection comprennent des premiers et seconds moyens de décomptage ayant leurs comptes $C_1$, $C_2$ initialisés au début de la zone mobile de chaque ligne à NB et NP et décomptant à la fréquence des points de ligne le nombre de bits restant à allouer à ladite ligne et le nombre de mots de points restants susceptibles d'être codés et des moyens de comparaison des comptes desdits premiers et seconds moyens de décomptage pour commander l'écriture dans lesdits moyens de codage des mots MICD représentatifs des points à transmettre chaque fois que $C_1/\bar{B} \geq C_2$.

De manière générale, en vue de réduire la quantité d'informations à transmettre, les moyens de codage du dispositif de codage transmettent sur la voie numérique, non pas l'amplitude du niveau de quantification MICD de chaque point modifié sélectionné, mais un mot MIC à $\bar{B}$ bits représentatif du numéro du niveau. Deux décodeurs identiques sont inclus respectivement dans le dispositif de codage à l'émission et dans le dispositif de décodage à la réception et restituent un mot représentatif dudit niveau afin que les mémoires d'image à l'émission et à la réception mémorisent après interpolation et éventuellement filtrage passe-bas les mots identiques pour chaque point de la zone en mouvement d'une ligne. Selon une première variante du dispositif de codage, des moyens sont prévus pour calculer les valeurs maximale DMAX et moyenne $\bar{D}$ des mots en code MICD de tous les points de la zone mobile d'une ligne afin que les moyens de codage sélectionnent une loi de quantification à $2\bar{B}$ niveau propre à la zone mobile de la ligne. Ceci permet de réduire au mieux la dynamique du signal visiophonique entrant. Une loi de quantification propre à une ligne peut être reconstituée à la réception dans le dispositif de décodage parce que $\bar{D}$ et DMAX sont transmis dans le préambule informatif réservé à chaque ligne précédant les mots de niveau sélectionnés de la ligne. Selon une seconde variante moins complexe que la précédente, les numéros de niveaux d'une pluralité de lois de quantification sont mémorisés dans les moyens de codage. Pour chaque ligne, une loi de quantification mémorisée est alors sélectionnée en fonction du nombre moyen $\bar{B}$ de bits alloués à chaque mot de niveau relatif à un point réellement transmis.

D'autres avantages de la présente invention apparaîtront plus clairement à la lecture de la description qui suit de plusieurs exemples de réalisation et à l'examen des dessins correspondants, dans lesquels :

la Figure 1 est un diagramme simplifié montrant la zone mobile d'une image visualisée sur l'écran d'un visiophone ;

la Figure 2 est un bloc-diagramme du dispositif de codage de la partie émission conforme à l'invention, relatif à la première variante, et en partie à la seconde variante ;

la Figure 3 est un bloc-diagramme détaillé du circuit de détection de mouvement à l'émission qui inclut également une unité arithmétique du calcul de $\bar{B}$ et NP analogue à celle du dispositif de décodage montré à la Fig. 13 ;

la Figure 4 est un bloc-diagramme détaillé du circuit de répartition de bits qui sélectionne les points modifiés à transmettre :

la Figure 5 est un bloc-diagramme détaillé de l'unité arithmétique pour calculer DMAX et $\bar{D}$ ;

la Figure 6 est un bloc-diagramme détaillé du codeur MIC de la partie émission, selon la première variante ;

la Figure 7 est un bloc-diagramme détaillé du décodeur MIC de la partie émission ou réception, selon la première variante ;

la Figure 8 est un bloc-diagramme détaillé du codeur MIC de la partie émission, selon la seconde variante ;

la Figure 9 est un bloc-diagramme détaillé du décodeur MIC de la partie émission ou réception, selon la seconde variante ;

la Figure 10 est un bloc-diagramme détaillé d'un circuit d'interpolation linéaire ;

la Figure 11 est un bloc-diagramme détaillé d'un circuit de filtrage spatial conditionnel ;

la Figure 12 est un diagramme montrant le sous-échantillonnage dans la zone mobile d'une ligne ; et

la Figure 13 est un bloc-diagramme du dispositif de décodage de la partie réception conforme à l'invention, relatif à la première variante et en partie à la seconde variante.

On se reportera dans la présente description, à titre d'exemple, à un standard visiophonique dont les caractéristiques fonctionnelles sont les suivantes :

définition d'une image visualisée par un visiophone :

— 313 lignes dont 288 sont utilisées par l'image proprement dite et dont 25 sont réservées au signal de synchronisation et de suppression de trame (ou demi-image) ;

— chaque ligne contient 284 points-images dont 53 sont réservés au signal de synchronisation et de suppression de ligne, et dont 231 sont des points de la partie visible d'image ;

— fréquence du signal de synchronisation de trame 50 Hz, c'est-à-dire 25 images par seconde avec entrelacement d'ordre 2 ;

— fréquence du signal de synchronisation de ligne : 7,825 kHz ;

— fréquence des points de l'image : $7,825 \times 284 = 2,222\ 3$ MHz.

Après échantillonnage du signal visiophonique transmis par la caméra du visiophone, le dispositif de codage de la partie émission reçoit un signal numérique à la fréquence de $8 \times 2,222\ 3 = 17,778$ Mbits/s dans lequel chaque point est échantillonné sur 256 niveaux entre le blanc (1 volt) et le noir (0,3 volt) et occupe un intervalle temporel $\tau = 450$ ns correspondant à un mot à 8 bits.

La voie numérique convoyant le signal numérique visiophonique après codage est du type TN1 et conforme aux recommandations internationales. Elle a un débit numérique égal à 2,048 Mbit/s et transmet une trame récurrente de 32 octets dont les intervalles temporels IT 0 et IT 16 sont réservés, entre autres, à des fins de verrouillage de trame, de signalisation et d'indication de justification. Un intervalle temporel à 8 bits de la trame de la voie est alloué à un canal numérique à 64 kbit/s convoyant l'information complémentaire telle que le son. Par suite, 29 intervalles temporels dans une trame numérique à 2,048 Mbit/s sont occupés par le signal visiophonique élaboré par la partie d'émission, soit un débit visiophonique transmis à la sortie de la partie d'émission égal à $2,048 \times 29/32 = 1,856$ Mbit/s.

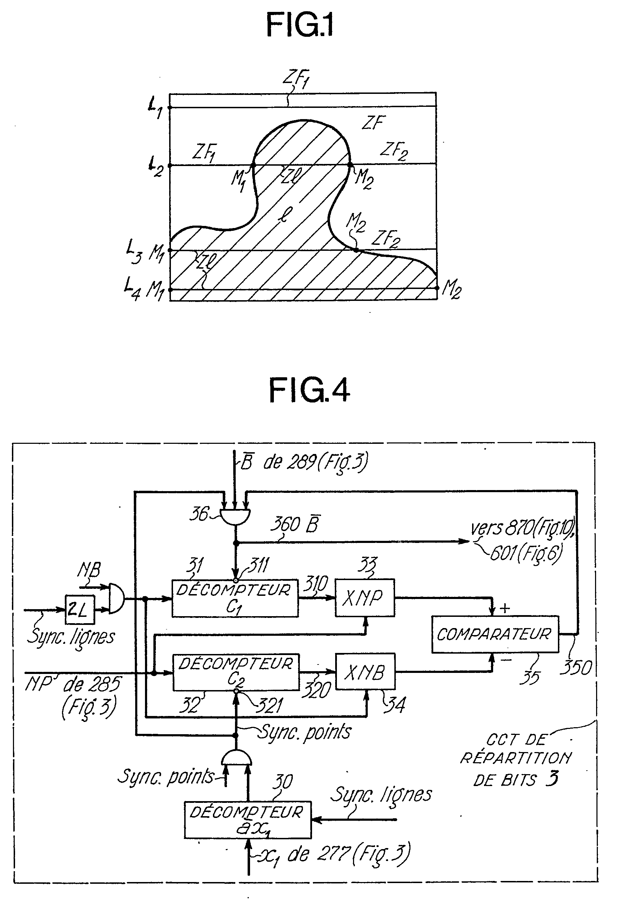

Conformément à l'invention, le dispositif de codage permet de réduire le débit du signal visiophonique acheminant les images de 17,778 Mbit/s à 1,856 Mbit/s, en assignant dans le signal numérique codé sortant un nombre constant de bits N à chaque ligne utile parmi 288 d'une image, qui est égal, selon les paramètres précédents, à $N = 1,856 \cdot 10^6/(288 \times 25) = 258$ bits/ligne d'image. On supposera dans la suite que, parmi ces 258 bits, les 27 premiers sont affectés à un préambule contenant des mots destinés notamment à la synchronisation de ligne et à certaines discriminations inhérentes au codage selon l'invention. Par conséquent, il reste $NB = 258 - 27 = 231$ bits qui sont assignés véritablement à la transmission de la portion visible d'une ligne d'image. Ces NB bits sont répartis généralement en mots d'au moins 3 bits. Chaque mot indique l'amplitude d'un point particulier de la ligne qui est sélectionné selon le codage en MICD conforme à l'invention, dont le principe est décrit ci-après en référence à la Fig. 1.

Sur cette figure, on a représenté schématiquement sur l'écran d'un visiophone le contour de l'image mobile, tel que le visage du locuteur I (partie hachurée) se détachant sur un fond fixe F généralement unicolore, ou plus précisément ayant un niveau colorimétrique uniforme. Chaque ligne peut être partagée en une zone $ZF_1$, resp. $ZF_2$ ou deux zones $ZF_1$ et $ZF_2$ représentant le fond F et ne variant d'une image à la suivante qu'en fonction du bruit de la caméra, et/ou en une zone centrale ou latérale Z1 essentiellement mobile, représentant le locuteur I en mouvement ou le fond brusquement découvert. Ainsi pour des lignes $L_1$, $L_2$, $L_3$, $L_4$ respectivement au-dessus de la zone I, au niveau du visage du locuteur, au niveau du cou du locuteur et au niveau des épaules du locuteur entièrement filmées, comme montré à la Fig. 1, la répartition des zones est donnée par le tableau I suivant :

Tableau I

| Zone | $ZF_1$ | ZI | $ZF_2$ |
|---|---|---|---|
| Ligne $L_1$ | fixe | vide | vide |
| Ligne $L_2$ | fixe | mobile | fixe |
| Ligne $L_3$ | vide | mobile | fixe |
| Ligne $L_4$ | vide | mobile | vide |

Pour chaque ligne, ces zones sont délimitées par deux points image $M_1$ et $M_2$ de coordonnées $x_1$ et $x_2$, ou plus précisément, la zone mobile ZI de l'image du locuteur I est délimitée par rapport au fond F par des paires de points $M_1$, $M_2$. Comme le signal vidéo représentant le fond présente une variation d'amplitude constante le long de chaque ligne, seuls les points de la zone image I sont d'intérêt pour la reproduction de l'image dans la partie réception de l'installation visiophonique. Par exemple, la zone $M_1 M_2$ de la ligne $L_2$ est petite, la zone $M_1 M_2$ de la ligne $L_3$ occupe la majeure partie à gauche de l'écran et la zone $M_1 M_2$ de la ligne $L_4$ occupe la totalité de l'écran. Etant donné, comme déjà dit, que le nombre de bits NB affecté à une ligne est constant, le dispositif de codage conforme à l'invention transmet l'information image d'une zone $M_1 M_2$ d'une ligne en réduisant le contenu réel de cette information reçue sous la forme de mots de 8 bits à 17,778 Mbit/s suivant certains critères fondés, d'une part sur la redondance temporelle de l'image ou traitement des seules parties de l'image en mouvement et, d'autre part, sur la redondance spatiale en vue de réduire la dynamique du signal transmis par un codage en impulsions codées différentiel (MICD).

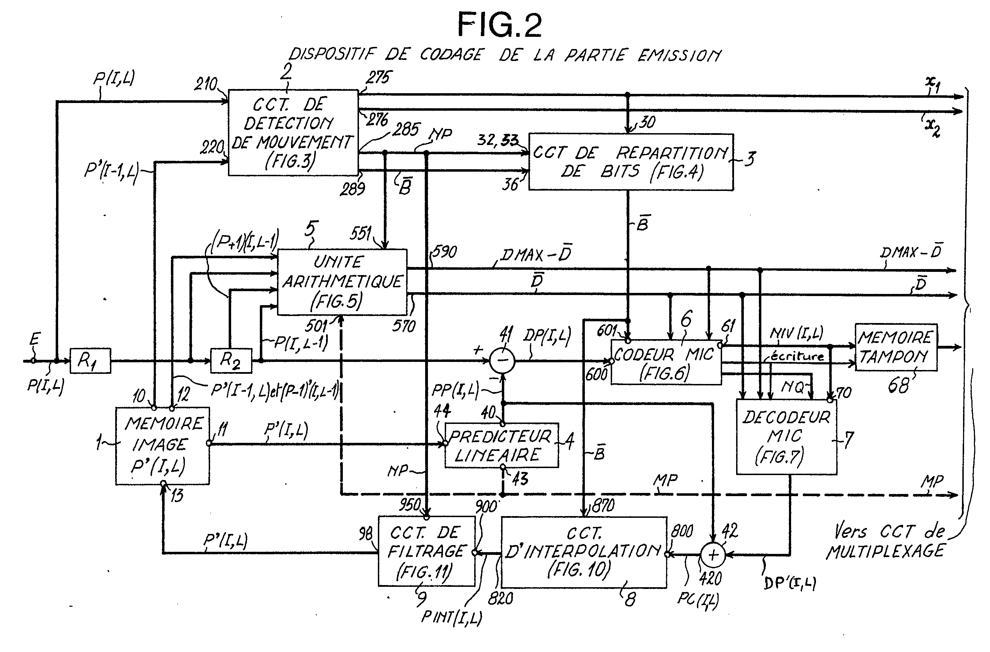

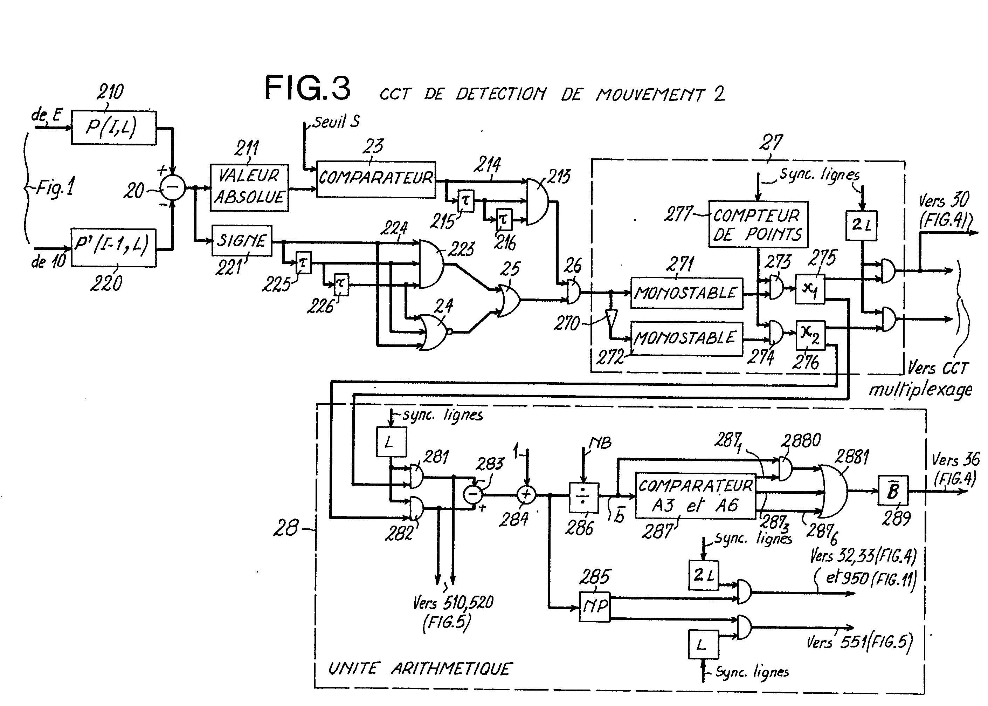

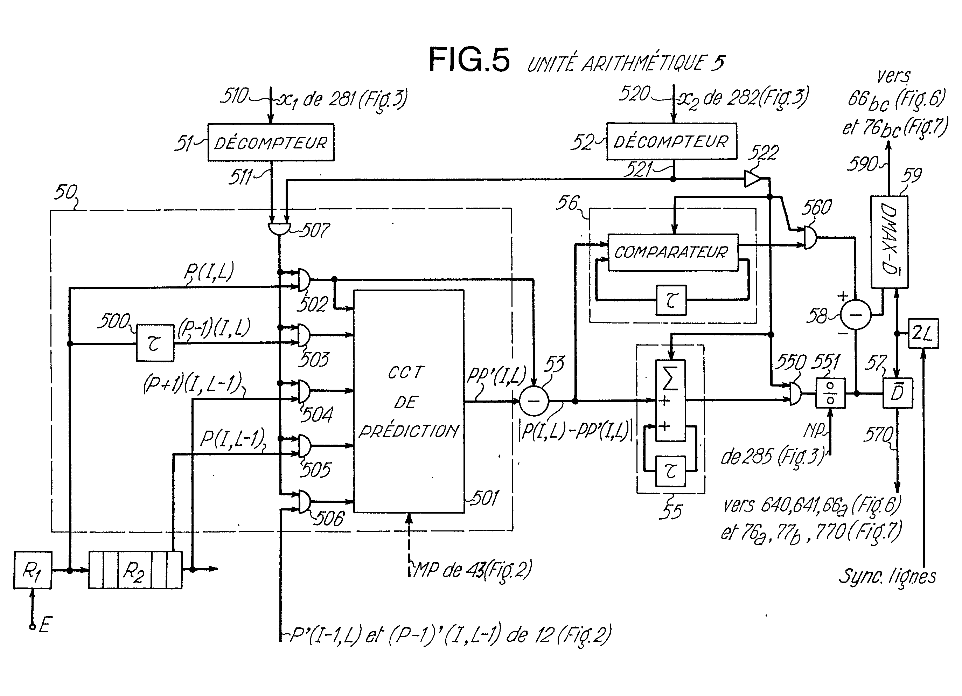

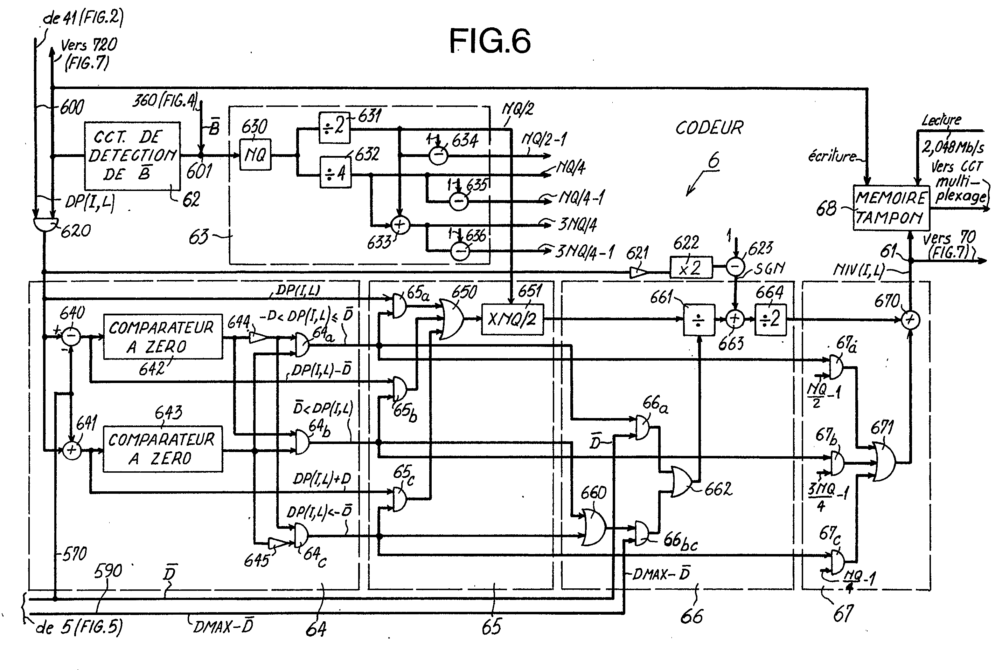

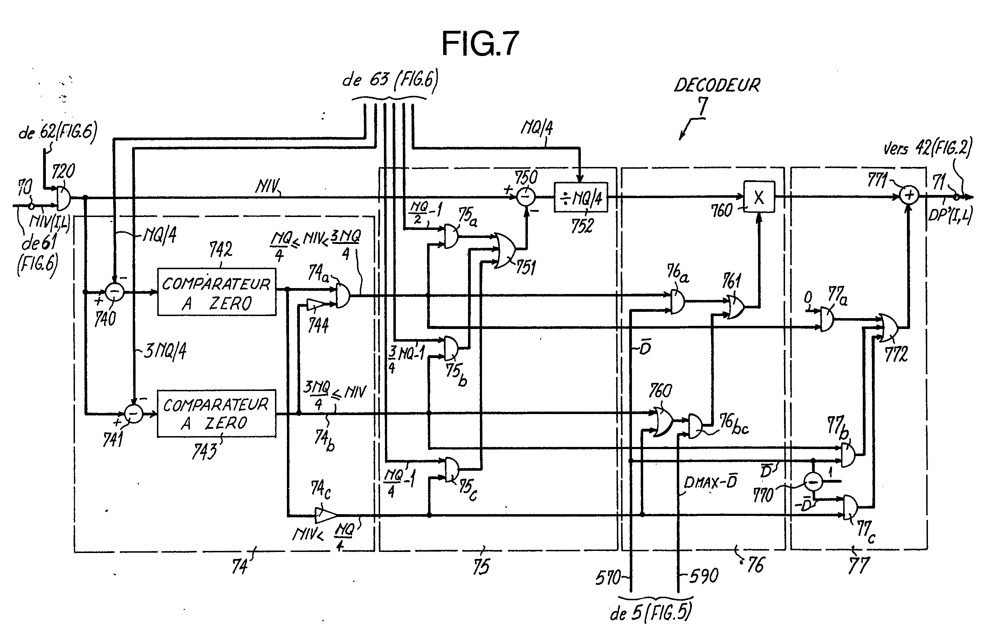

Les différents circuits du dispositif de codage de la partie émission, illustré à la Fig. 2, seront décrits dans la suite au fur et à mesure du traitement du signal visiophonique numérique à 17,778 Mbit/s provenant de la caméra et de l'échantillonneur associé.

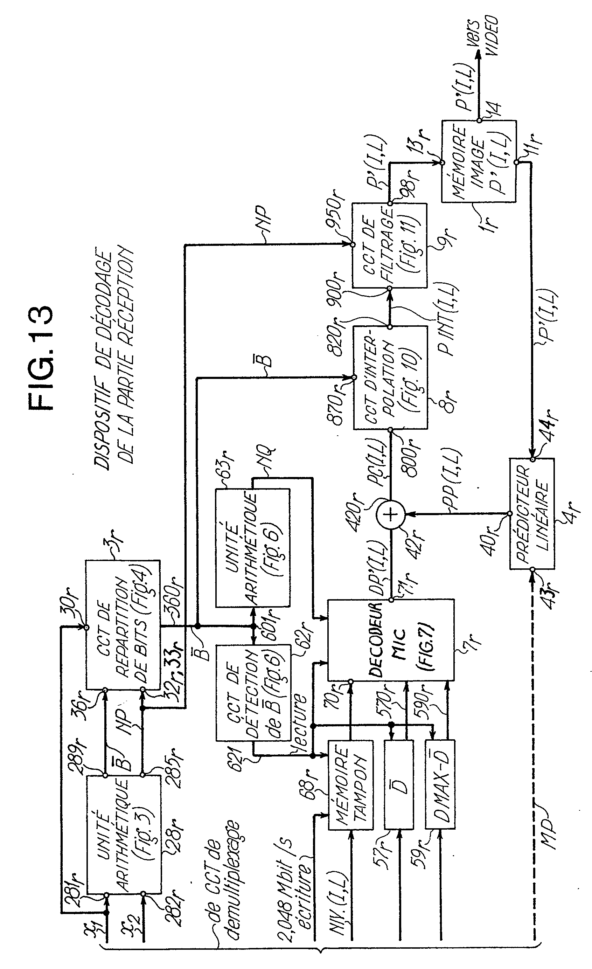

Le dispositif de codage comprend essentiellement une mémoire d'image 1 qui mémorise la trame impaire suivie de la trame paire d'une même image, un circuit de détection de mouvement 2, un circuit de répartition de bits 3, un prédicteur linéaire 4, une unité arithmétique 5 élaborant des valeurs numériques DMAX, $\hat{D}$ caractérisant la dynamique du signal visiophonique entrant, un codeur MIC 6, un décodeur MIC 7, un circuit d'interpolation 8 et un circuit de filtrage spatial conditionnel 9. Il comprend également deux registres à décalage $R_1$ et $R_2$ reliés en série, chacun à 231 × 8 étages, ainsi qu'un soustracteur numérique 41 et un additionneur numérique 42 ayant chacun une entrée reliée à la sortie 40 du prédicteur 4. L'entrée E du dispositif de codage reçoit uniquement les mots binaires à 8 bits P (I,L) au débit de 17,778 Mbit/s qui sont représentatifs des 231 points visibles d'une ligne L d'une image I. Des dispositifs de filtrage et de séparation (non représentés) précèdent en amont l'entrée E, en vue de séparer l'information vidéo de l'information de synchronisation et suppression de trames et de lignes. Ces dispositifs sont connus par l'art antérieur et n'appartiennent pas au cadre de l'invention. De même, les dispositifs de multiplexage et de transmission reliés aux sorties du dispositif de codage en vue de l'élaboration de la voie numérique sortants à 2,048 Mbit/s ne sont pas décrits. En outre, on notera que les différentes liaisons illustrées dans les dessins sont des liaisons simples ou des bus et que les circuits logiques sont désignés ci-après par leur fonction et comprennent généralement un nombre de tels circuits élémentaires en parallèle. Les repères numériques aux entrées et sorties des blocs de la Fig. 2 (et de la Fig. 13) désignent des bornes ou éléments d'entrée ou de sortie pouvant se retrouver dans les figures détaillées des blocs correspondants.

En premier lieu, pour traiter la partie de l'image mobile relative à une ligne L, il est nécessaire de détecter les points $M_1$ et $M_2$ précédemment définis. Cette fonction est remplie par le circuit de détection de mouvement 2 montré à la Fig. 3 dans lequel un soustracteur numérique 20 reçoit par son entrée directe (+) un mot de point P (I,L) d'une ligne L de l'image à traiter I transmis par l'entrée E et par son entrée inverse (−) un mot de point P' (I-1, L) de la ligne L de l'image précédente (I-1) transmis par la sortie 10 de la mémoire d'image 1.

La détection du mouvement est fondée, conformément à l'invention, sur la comparaison point-à-point des zones frontières au niveau des points $M_1$ et $M_2$ (Fig. 1) entre l'image actuellement reçue I à l'entrée E et l'image précédente I-1 mémorisée dans la mémoire d'image 1. A cet égard, la mémoire d'image 1 (Fig. 2) mémorise tous les mots P' (I,L) de points d'une image, à savoir 288 × 231 mots de 8 bits. Ces mots P' (I,L) sont en fait élaborés après codage, comme cela apparaîtra dans la suite. La mémoire 1 est par exemple constituée par 34 modules de capacité égale à 16 kbits. Elle est du type à accès aléatoire (RAM) et est écrite et lue à une période sensiblement inférieure à l'intervalle temporel $\tau$ occupé par un mot de point P (I,L). On notera par ailleurs que, dans les figures, on n'a pas représenté la base de temps du dispositif de codage qui élabore, à partir d'une horloge ou boucle de phase calée sur la fréquence de ligne à 7,825 kHz, les différents signaux de supervision propres à la commande des circuits composants 1 à 9.

Chaque point P (I,L) de l'image actuelle I et le point correspondant P' (I-1,L) de l'image précédente (I-1) sont transmis dans deux registres tampons 210 et 220 du circuit de détection de mouvement 2, qui sont respectivement interconnectés entre l'entrée directe (+) du soustracteur 20 et l'entrée E et entre l'entrée inverse (−) du soustracteur 20 et la sortie 10 de la mémoire d'image 1. Le signal différence P (I,L) − P' (I-1, L) sortant du soustracteur 20 est transmis aux entrées de deux unités arithmétiques 211 et 221. La première 211 transmet un signal indiquant la valeur absolue de la différence |P (I,L) − P' (I-1,L)| à l'une des entrées d'un comparateur numérique 23 dont l'autre entrée reçoit un signal de seuil S. Ce seuil S est par exemple égal à l'écart entre deux ou trois niveaux successifs des 256 niveaux équirépartis correspondant à l'échantillonnage du signal visiophonique entrant. Si P (I,L) − P' (I-1,L)| ⩾ S, la sortie du comparateur 23 est à l'état « 1 », et à l'état « 0 » dans le cas contraire. La seconde unité arithmétique 221 transmet un « 1 » si la différence P (I,L) − P' (I-1, L) est positive, et un « 0 » dans le cas contraire. La sortie du comparateur 23 et celle de l'unité arithmétique 221 sont reliées respectivement à des portes ET 213 et 223, ayant par exemple trois entrées. L'une des entrées 214, 224 d'une porte ET 213, resp. 223, est reliée directement à la sortie du comparateur 23, resp. de l'unité 221. Chacune des deux autres entrées sont reliées à cette dernière entrée 214, 224 à travers une ligne de retard 215, 216, resp. deux lignes de retard 215-216, 225-226. Ces lignes de retard imposent un retard égal à $\tau$ et assurent que les amplitudes de trois points consécutifs d'une ligne de l'image actuelle ont fluctué avec un écart supérieur au seuil S et un même signe par rapport aux points correspondants de l'image précédente (I-1). Si le signe est positif, la sortie de la porte ET 223 transmet un « 1 » ou, si le signe est négatif, la sortie d'une porte NON-OU 24, dont les trois entrées sont reliées en parallèle à celles de la porte ET 223, transmet un « 1 ». Une porte ET 26 a ses entrées respectivement reliées à la sortie de la porte ET 213 et, à travers une porte OU 25, aux sorties des portes ET 223 et NON-OU 24. Ainsi, dès que la sortie de la porte ET 26 est à l'état « 1 » au début du traitement d'une ligne, celle-ci indique la détection du point $M_1$. Après la transmission des autres points de l'image mobile de la majeure partie de la zone ZI (Fig. 1) qui est modifiée au-delà du seuil S d'une image à la suivante, dès que la sortie de la porte ET 26 revient à l'état « 0 », celle-ci indique la détection du point $M_2$. Le critère mis en œuvre dans le circuit de détection de mouvement 2 est ainsi fondé sur le déplacement de la transition ou contour entre les zones $ZF_1$ et $ZF_2$ d'une part et la zone ZI d'autre part, c'est-à-dire sur la différence inter-image des amplitudes des points en mouvement. Ce critère discrimine également les points en mouvement du bruit de la caméra par le choix d'une valeur de seuil S convenable.

La sortie de la porte ET 26 est reliée à un circuit logique 27 qui délivre les coordonnées $x_1$, $x_2$ des points $M_1$, $M_2$ détectés. Le circuit 27 comporte deux bascules monostables 271 et 272 qui sont reliées directement et à travers un inverseur 270 à la sortie de la porte ET 26. Les sorties des bascules 271, 272 sont reliées à deux portes ET 273 et 274. Les autres entrées des portes ET 273, 274 sont reliées à la sortie d'un compteur de points 277. Ce compteur 277 est débloqué après la fin du signal de synchronisation de chaque ligne succédant aux 53 premiers points et est remis à zéro et bloqué après le $231^e$ point suivant. La sortie du compteur 277 transmet ainsi les coordonnées successives 1 à 231 des points de ligne. Des registres tampons 275, 276 reliés aux sorties des portes ET 273 et 274 mémorisent les coordonnées $x_1$ et $x_2$ des points $M_1$ et $M_2$ détectés.

On notera, comme il sera expliqué ci-après, que la détection des points $M_1$ et $M_2$ dans le circuit de détection de mouvement 2 est élaborée pendant une durée de transmission de ligne L égale à 1/7,825 s. Au cours de cette détection, les 231 mots de point P (I,L) à 8 bits de la ligne L sont enregistrés et retardés en série dans le premier registre à décalage $R_1$ relié à l'entrée E. La lecture des coordonnées $x_1$ et $x_2$ à partir des registres 275 et 276 est commandée au début de la ligne suivante L + 1 reçue à l'entrée E. Les différents retards d'une durée d'une ligne L ou de deux lignes 2L pour l'élaboration des différentes opérations inhérentes au codage sont indiqués dans les dessins par des blocs désignant des lignes de retard du signal de synchronisation de lignes.

En se reportant à la Fig. 4, le circuit de répartition de bits 3 délivre, dès la réception de la seconde ligne suivante L + 2 sur l'entrée E, le nombre de bits moyen $\bar{B}$ assigné à chaque point de ligne L et sélectionne selon des critères de répartition les points qui seront réellement transmis en vue d'adapter le débit entrant à 17,778 Mbits/s au débit image sortant à 1,856 Mbit/s, c'est-à-dire au débit réel à 2,048 Mbits/s après multiplexage. Les critères de répartition sont les suivants :

a) chaque point réellement transmis est indiqué par un mot d'au moins 3 bits en vue d'obtenir un codage MICD donnant des qualités d'image suffisantes à la réception ; le nombre de bits de ce mot est limité de préférence par une borne supérieure égale à 6 par exemple ;

b) la bande passante étant réduite dans la zone en mouvement ZI (Fig. 1), en particulier dû à l'effet de flou inhérent à l'intégration par la caméra, un sous-échantillonnage des points en mouvement peut être pratiqué ; en d'autres termes, certains points d'une ligne de la zone I ne sont ni codés ni transmis et seront reconstitués en amont de la mémoire d'image, aussi bien dans le dispositif de codage à l'émission (Fig. 2) que dans le dispositif de décodage à la réception (Fig. 13) par des circuits d'interpolation et de filtrage tels que 8 et 9 ;

c) lorsque le nombre total de bits $NP \times \bar{B}$ des NP mots de point dans la zone ZI est inférieur au nombre de bits NB réservés à une ligne, c'est-à-dire lorsque la zone ZI ou $x_2 - x_1$ est très petite, des bits de bourrage sans signification et/ou éventuellement des mots informatifs supplémentaires, tels que des mots MIC de points d'image, peuvent être mélangés au $NP \times \bar{B}$ bits pour atteindre NB bits.

La répartition des bits et la sélection d'échantillons dépendent essentiellement de la largeur de la zone ZI égale à $x_2 - x_1$ au niveau de la ligne L. Pour ce faire, dans le circuit de détection de mouvement 2 montré à la Fig. 3, une unité arithmétique 28 calcule le nombre de points NP de la zone ZI compris en $M_1$ et $M_2$, y compris ces derniers, et le nombre moyens de bits $\bar{B}$ à affecter à chaque point réellement transmis. Sous la commande du signal de synchronisation de la ligne suivante L + 1 précédant le début du transfert des mots de point de la ligne L du registre $R_1$ vers le registre $R_2$, montré à la Fig. 2, les coordonnées $x_1$ et $x_2$ sont lues dans les registres 275 et 276 à travers des portes ET de lecture 281 et 282. Elles sont transmises, d'une part, aux entrées 510 et 520 de l'unité arithmétique 5 (Fig. 5) et, d'autre part, respectivement aux entrées inverse (−) et directe (+) d'un soustracteur numérique 283. La différence $(x_2 - x_1)$ est ajoutée à l'unité dans un additionneur 284 pour délivrer $x_2 - x_1 + 1 = NP$ à un registre 285 et à l'entrée d'un diviseur par NB, 286. Le diviseur 286 effectue la division entière : partie entière (NB/NP) = $\bar{b}$ = nombre de bits moyen. Le nombre $\bar{b}$ transmis par le diviseur 286 est comparé à 3 et à 6 dans un comparateur 287. Si $6 \geqslant \bar{b} \geqslant 3$, la sortie $287_1$ du comparateur 287 ouvre une porte ET 2 880 pour transmettre le nombre de bits affectés à chaque point après codage, tels que $\bar{b} = \bar{B}$, de la sortie du diviseur 286 vers un registre 289, à travers une porte OU 2 881. Si $\bar{b} < 3$, la sortie $287_3$ du comparateur 287 transmet la limite inférieure du nombre de bits moyen $\bar{B}$, égale à 3, au registre 289 à travers la porte OU 2 881. Enfin, si $\overline{b} > 6$, la sortie $287_6$ du comparateur 287 transmet la limite supérieure du nombre de bits moyen $\overline{B}$, égale à 6, au registre 289 à travers la porte OU 2 881.

Le circuit de répartition de bits 3 montré à la Fig. 4 comprend deux décompteurs 31 et 32 qui ont leurs comptes respectivement initialisés à NB et à NP par lecture d'une mémoire morte (non représentée) et du registre 285 (Fig. 3) sous la commande du signal de synchronisation de lignes. Un décompteur 30 est également initialisé à $x_1$ par lecture du registre 275 (Fig. 3) afin que, dès que son compte atteint zéro, il déclenche les décomptages des décompteurs 31 et 32 à la fréquence de point $1/\tau$, simultanément à la transmission en série des mots de point P (I,L) de la ligne L du registre $R_2$ vers l'entrée 600 du codeur 6 à travers le soustracteur 41 (Fig. 2). Les comptes des décompteurs 31 et 32 sont transmis sur les bus de sortie 310 et 320, à la fréquence de points $1/\tau = 2,222\,3$ MHz, vers deux circuits de multiplication 33 et 34, respectivement par NP et NB. Les sorties des circuits 33, 34 sont reliées aux entrées directe (+) et inverse (−) d'un comparateur numérique 35. Lorsque la différence des nombres comparés dans le comparateur 35 est positive, sa sortie 350 est à l'état « 1 » et commande l'ouverture d'une porte ET 36 dont l'autre entrée reçoit à chaque période $\tau$ le nombre moyen de bits $\overline{B}$ transmis par le registre 289 (Fig. 3). L'entrée de comptage 311 du décompteur 31 est reliée à la sortie de la porte ET 36 et l'entrée de décomptage 321 du décompteur 32 reçoit un « 1 » à chaque période $\tau$ correspondant aux NP points de la zone mobile ZI de la ligne L.

Du circuit de répartition de bits 3 montré à la Fig. 4, il apparaît que le décompteur 31 décompte le nombre de bits disponibles restant à attribuer à la ligne L et que le décompteur 32 décompte le nombre de points restant de la zone mobile ZI. Le compte $C_2$ du décompteur 32 est décrémenté de l'unité successivement pour chaque point compris entre $M_1$ et $M_2$. Le compte $C_1$ du décompteur 31 est diminué de $\overline{B}$ chaque fois que la sortie 350 du comparateur 35 est positive, c'est-à-dire lorsque $C_1/\overline{B} \geqslant C_2$ ou $C_1 \times NP \geqslant C_2 \times NB$ et $C_1 \times NP \geqslant \overline{B} \times NP$.

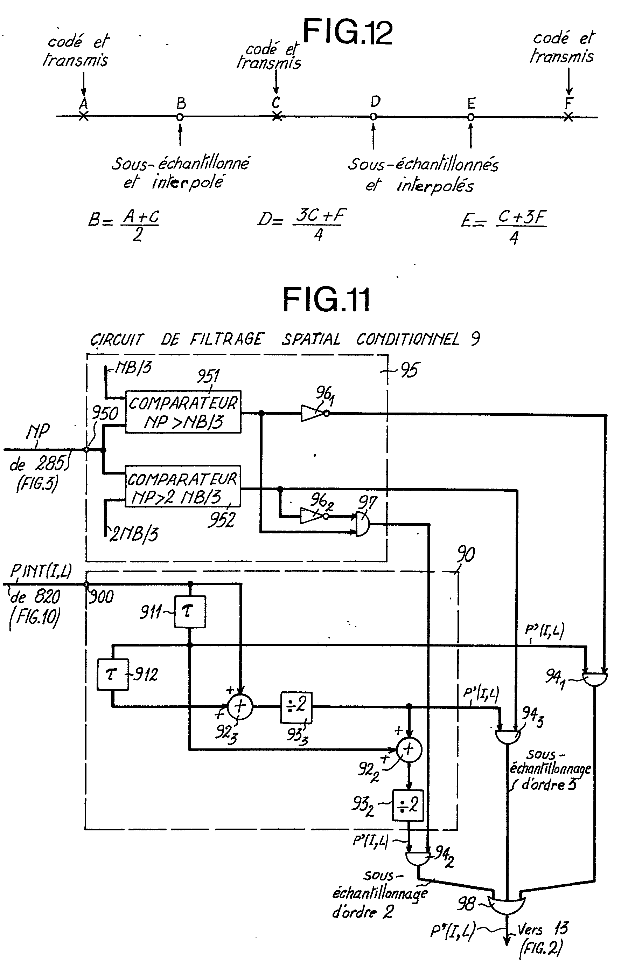

Lorsque la relation précédente est satisfaite, le point est échantillonné c'est-à-dire transmis, le décompteur 31 est décrémenté de $\overline{B}$ et la porte 36 transmet via le bus 360 le mot $\overline{B}$ à l'entrée de décomptage 311 du décompteur 31 et à l'entrée 601 du codeur 6, en vue de coder en code MICD ledit point. Par contre, lorsque la relation précédente n'est pas satisfaite, le point est sous-échantillonné, c'est-à-dire sera reconstitué par l'interpolation dans le circuit d'interpolation 8 (Fig. 2 et 10), la porte ET 36 reste fermée et le décompteur 31 n'est pas décrémenté. Le décompteur 32 est toujours décrémenté de l'unité lors du passage d'un point au suivant.

Les deux tableaux suivants II et III illustrent à titre d'exemple simple l'opération de répartition de bits pour un nombre de bits disponibles NB par ligne égal à 20 bits, bien qu'en réalité ce nombre soit plus grand.

### Tableau II

| NB = 20 bits | NP = 6 points | | | | | $\overline{b} = 3\ \overline{B} = 3$ |
|---|---|---|---|---|---|---|
| Points de la ligne | $M_1$ | | | | $M_2$ | Bits de bourrage |
| $C_1 \times NP$ (sortie de 33) | 120 | 102 | 84 | 66 | 48 | 30 | |
| $C_2 \times NB$ (sortie de 34) | 120 | 100 | 80 | 60 | 40 | 20 | |
| Points échantillonnés $\overline{B}$ (sortie 360) | 3 | 3 | 3 | 3 | 3 | 3 | 2 |

### Tableau III

| NB = 20 bits | NP = 11 points | | | | | | | | | | $\overline{b} = 1$ forcé à $\overline{B} = 3$ |
|---|---|---|---|---|---|---|---|---|---|---|---|
| Points de la ligne | $M_1$ | | | | | | | | | $M_2$ | Bits de bourrage |
| $C_1 \times NP$ (sortie de 33) | 220 | 187 | 187 | 154 | 154 | 121 | 88 | 88 | 55 | 55 | 22 | |

# 0 022 713

Tableau III  (suite)

| NB = 20 bits | | NP = 11 points | | | | | | | | | | | b̄ = 1 forcé à B̄ = 3 |
|---|---|---|---|---|---|---|---|---|---|---|---|---|---|
| C$_2$ × NB (sortie de 34) | | 220 | 200 | 180 | 160 | 140 | 120 | 100 | 80 | 60 | 40 | 20 | |
| Sortie 360 — Points échantillonnés B̄ | | 3 | | 3 | | 3 | 3 | | 3 | | 3 | | 2 |
| Points sous-échantillonnés & reproduits par interpolation | | | 0 | | 0 | | | 0 | | 0 | | 0 | |

On décrit maintenant les circuits 4 et 5 qui sont destinés à réduire la dynamique du signal entrant.

Le prédicteur linéaire 4 (Fig. 2) est d'un type connu. Le mot de point prédit PP (I,L) à 8 bits transmis par la sortie 40 est obtenu par une combinaison linéaire de points déjà transmis de sorte qu'il soit identique à l'émission comme à la réception afin d'éviter la transmission d'informations supplémentaires. La prédiction est fondée sur la combinaison linéaire de l'amplitude en code MIC de points prédéterminés appartenant à l'image actuellement traitée I (prédiction intra-image) et/ou à l'image précédemment traitée I-1 (prédiction inter-image). Ces différentes prédictions sont décrites par exemple dans l'article de B. G. Haskell, intitulé « Entropy Measurements for Nonadaptive and Adaptive, Frame-to-Frame, Linear-Predictive Coding of Videotelephone Signals » paru dans « Bell System Technical Journal », juillet-août 1975, pages 1155 à 1174. Pour un point P (I,L) de l'image I sur la ligne L, le point prédit correspondant peut être par exemple :

1) PP (I,L) = P' (I − 1,L)
ou 2) PP (I,L) = (P − 1)' (I,L)
ou 3) PP (I,L) = (P − 1)' (I,L) + P' (I,L − 1) − (P − 1)' (I,L − 1)
ou 4) PP (I,L) = [(P − 1)' (I,L) + (P + 1)' (I,L − 1)]/2

P − 1 et P + 1 désignent les points précédant et suivant le point P sur une ligne L d'une image I. P', (P − 1)' et (P + 1)' sont relatifs aux valeurs obtenues après codage et interpolation, puis mémorisation dans la mémoire d'image 1. Le prédicteur 4 peut être du type non adaptif et, dans ce cas, effectue toujours la même opération de prédiction pour tous les points. Il peut être également du type adaptif et, dans ce cas, opère pour chaque ligne d'une image selon l'une des prédictions linéaires précédentes en fonction de certains critères, tels que le déplacement relatif de l'image actuelle I relativement à l'image précédente (I − 1). Selon ce dernier cas, afin de reproduire convenablement la ligne à la réception, la sortie 43 du prédicteur 4 transmet un mot dit de prédiction MP, indiquant l'opération de prédiction sélectionnée pour l'image de la ligne. Ce mot MP est inséré dans le préambule d'information à 27 bits assigné à la ligne dans la voie numérique à 2,048 Mbits/s. Comme montré à la Fig. 2, pour chaque mot de point P (I,L) d'une ligne L d'une image I transmis par la sortie du second registre à décalage R$_2$, la sortie 40 du prédicteur 4 délivre le mot prédit correspondant PP (I,L) en fonction d'au moins l'un des mots (P − 1)' (I,L), (P − 1)' (I,L − 1), P' (I,L − 1), P' (I − 1,L) et (P + 1)' (I,L − 1) transmis par la sortie 11 de la mémoire d'image 1. Le soustracteur numérique 41 transmet à l'entrée 600 du codeur 6, le mot de différence tel que DP (I,L) = P (I,L) − PP (I,L).

Le codeur 6 du dispositif de codage quantifie le signal différentiel numérique DP (I,L) sur un nombre de niveaux de quantification NQ dépendant du nombre de bits B̄ affectés à chaque point échantillonné d'une ligne commune L par le circuit de répartition de bits 3. En fait, le codage effectué par le codeur 6 est établi sur la valeur absolue |DP (I,L)|, les valeurs correspondant à DP (I,L) < 0 étant obtenues par symétrie. Les niveaux de quantification sont répartis — comme montré ci-après — dans toute la plage de variation du signal différentiel entrant DP (I,L) pour la zone mobile ZI d'une ligne L.

On désigne par DMAX (L) et D̄ (L) les valeurs maximale et moyenne du signal différentiel entrant DP (I,L) pour une ligne L, telle que :

$$DMAX (L) = \max_{M_1 \leqslant P \leqslant M_2} |P (I,L) − PP (I,L)|$$

$$\bar{D} (L) = 1/NP \sum_{P = M_1}^{P = M_2} |P (I,L) − PP (I,L)|$$

9

## 0 022 713

Pour le nombre de niveaux de quantification $NQ = 2^{\bar{B}}$, le codeur 6 répartit uniformément les niveaux pour moitié sur la plage $[- \bar{D}, + \bar{D}]$ et pour moitié sur les plages $[- DMAX, - \bar{D}$ [et] $\bar{D}, DMAX]$. Un tel codage permet d'éviter la saturation du codeur, productrice de traînage et de défauts ponctuels visibles.

Ainsi, il apparaît, de ce qui précède, que le codage de tout point sélectionné par le circuit de répartition de bits 3 nécessite la connaissance préalable, d'une part, de $x_1$ et $x_2$ et, d'autre part, de DMAX et $\bar{D}$. Le calcul de DMAX et $\bar{D}$ est, par suite, antérieur au codage dans le codeur 6 mais est postérieur au calcul des coordonnées $x_1$ et $x_2$, puisqu'il dépend de ces dernières. La durée nécessaire au traitement d'une ligne est au plus de $1/(7,825 \text{ kHz}) = 128 \mu s$ et ne permet par les calculs successifs de $x_1$ et $x_2$ puis de $\bar{D}$ et DMAX, suivi du codage. Les différentes opérations précédant le codage de la ligne L s'effectuent simultanément aux codages respectifs des lignes précédentes, $L - 2$ et $L - 1$, comme indiqué dans le tableau IV suivant :

### Tableau IV

| Calcul de $x_1$, $x_2$ dans 2 (Fig. 3) | Calcul de NP et B dans 2 (Fig. 3) et calcul de $\bar{D}$ et DMAX dans 5 (Fig. 5) | Répartition de bits dans 3 et codage-décodage dans 6, 7 et 8 (Fig. 6, 7 et 8) |
|---|---|---|
| Registre $R_1$ | Registre $R_2$ | |
| Ligne L | Ligne $L - 1$ | Ligne $L - 2$ |
| Ligne $L + 1$ | Ligne L | Ligne $L - 1$ |
| Ligne $L + 2$ | Ligne $L + 1$ | Ligne L |

En se reportant à la Fig. 5, l'unité arithmétique 5 comprend en premier lieu un circuit 50 pour calculer une valeur prédite PP' (I,L) voisine de la valeur prédite réelle PP (I,L) qui est transmise par la sortie 40 du prédicteur 4. En effet, dans le cas d'une prédiction intra-image prenant en compte par exemple le point précédent $(P - 1)$ (I,L) prédictions précédentes 2, 3 et 4), celui-ci ne peut pas être fourni par la mémoire d'image 1, car il est obtenu après codage dans les codeur 6 et décodeur 7 et interpolation dans le circuit 8 qui sont postérieurs au calcul des valeurs $\bar{D}$ et DMAX. Si une telle prédiction est sélectionnée, la valeur $(P - 1)'$ (I,L) est remplacée par la valeur réelle $(P - 1)$ (I,L) qui est transmise par la sortie du premier registre à décalage $R_1$ à travers un circuit de retard de $\tau$ 500 vers une entrée d'un circuit de prédiction 501 inclus dans l'unité arithmétique 5. Si la prédiction est fondée sur les points P (I,L − 1) et (P + 1) (I,L − 1) de la ligne précédente $L - 1$ (prédictions précédentes 3 et 4), l'évaluation de ces valeurs est également fondée sur les valeurs transmises à l'entrée E du dispositif de codage. En effet, après que la valeur P (I,L) soit transmise par la sortie du registre $R_1$, la valeur enregistrée P' (I,L − 1) à mémoriser dans la mémoire d'image 1 est en cours d'évaluation dans les codeur et décodeur 6-7 ou dans le circuit d'interpolation 8, de la valeur (P + 1)' (I,L − 1) correspondant à la valeur (P + 1) (I,L − 1) après codage ou interpolation n'est pas encore transmise par la sortie du registre $R_2$. Par conséquent, pour de telles prédictions, on tient compte des valeurs réelles P (I,L − 1) et (P + 1) (I,L − 1) transmises respectivement par le dernier étage et l'avant-dernier étage du registre $R_2$ vers deux entrées du circuit de prédiction 501. Enfin, lorsque la prédiction est basée sur un point tel que (P − 1) (I,L − 1) (prédiction intra-image 3) ou sur un point tel que P (I − 1,L) (prédiction inter-image 1), les valeurs correspondantes (P − 1)' (I,L − 1) et P' (I − 1,L) obtenues après codage ou interpolation sont déjà mémorisées dans la mémoire d'image 1. Ces dernières valeurs sont transmises à deux autres entrées du circuit de prédiction 501 par la sortie 12 de la mémoire d'image 1 simultanément à la transmission de P (I,L) par la sortie du registre $R_1$. En résumé, le mot prédit PP' (I,L) transmis par la sortie du circuit de prédiction 501, qui est analogue au prédicteur 4, est donné par les relations suivantes comparativement aux quatre prédictions définies ci-dessous :

1) PP' (I,L) = P' (I − 1,L) égal à PP (I,L)
2) PP' (I,L) = (P − 1) (I,L) différent de PP (I,L)
3) PP' (I,L) = (P − 1) (I,L) + P (I,L − 1) − (P − 1)' (I,L − 1) différent de PP (I,L)
4) PP' (I,L) = [(P − 1) (I,L) + (P + 1) (I,L − 1)]/2 différent de PP (I,L).

Ces différentes prédictions sont sélectionnées par la détection du mot MP transmis par la sortie 43 du prédicteur 4 vers le circuit de prédiction 501.

Dans l'unité 5, après la détection du signal de synchronisation relative à la ligne $L + 1$, deux décompteurs 51 et 52 sont décrémentés de l'unité à chaque période $\tau$. Les comptes de ces décompteurs ont été préalablement initialisés aux valeurs $x_1$ et $x_2$ qui sont transmises sur leurs entrées 510, 520 à travers les portes ET de lecture 281 et 282 par les registres 275 et 276 (Fig. 3). Tant que le compte du décompteur 51 n'est pas nul, sa sortie 511 reste à l'état « 0 » et ferme des portes ET 502, 503, 504, 505 et 506 à travers une porte ET 507. Ces portes 502 à 506 sont destinées à transmettre les valeurs respectives P (l,L) à partir de la sortie du registre $R_1$, (P − 1) (l,L) à partir de la sortie de la ligne à retard 500, (P + 1) (l, L − 1) à partir de l'avant-dernier étage du registre $R_2$, P (l,L − 1) à partir du dernier étage ou sortie du registre $R_2$ et P' (l − 1, L) et (P − 1)' (l, L − 1) à partir de la sortie 12 de la mémoire d'image 1 vers le circuit de prédiction 501 lorsque les sorties 511, 521 des décompteurs 51, 52 sont à l'état « 1 », à travers la porte ET 507. Le compte du décompteur 51 est alors égal à zéro après la transmission du point $M_1$ par la sortie registre $R_1$ et le compte du second décompteur 52 est inférieur ou égal à $x_2$. Ainsi le circuit de prédiction 501 transmet des mots prédits PP' (l,L) correspond à tous les points compris entre $M_1$ et $M_2$ de chaque ligne L.

La valeur prédite PP' (l,L) est transmise à l'une des entrées d'un soustracteur 53 dont l'autre entrée reçoit la valeur réelle P (l,L) à partir de la sortie de la porte ET 502. La valeur absolue |P (l,L) − PP' (l,L)| est transmise par le soustracteur 53 pour être additionnée dans un accumulateur 55 à la somme des valeurs absolues précédemment calculées pour les points $M_1$ à P − 1. La valeur absolue |P (l,L) − PP' (l, L)| est également comparée dans un comparateur 56 à la valeur maximale desdites valeurs absolues précédemment reçues. Lorsque le compte du décompteur 52 est égal à zéro, ce qui correspond à la transmission du point suivant le point $M_2$ par la sortie du registre $R_1$, la sortie 521 de ce décompteur ouvre à travers un inverseur 522 deux portes ET 550 et 560 qui transmettent les valeurs suivantes :

$$\bar{D} \times NP = \sum_{P = M_1}^{P = M_2} |P (l,L) - PP' (l,L)|$$

$$DMAX = Max \, |P (l,L) - PP' (l,L)|$$
$$M_1 \leqslant P \leqslant M_2.$$

La valeur moyenne $\bar{D}$ est obtenue par un diviseur 551 relié à la sortie de la porte ET 550 et recevant NP par le registre 285 du circuit de détection de mouvement 2 (Fig. 3). Cette valeur moyenne $\bar{D}$ est mémorisée dans une mémoire 57, lue lors du codage de la ligne L proprement dit, et est transmise à l'entrée inverse (−) d'un soustracteur 58 recevant par son entrée directe (+) la valeur DMAX transmise par la porte ET 560. Le soustracteur 58 délivre DMAX − $\bar{D}$ à une mémoire 59, également lue lors du codage de la ligne L. Puis l'accumulateur 55 et le comparateur 56 sont remis automatiquement à zéro.

Le codeur montré à la Fig. 6 transmet sur sa sortie 61 un mot codé binaire NIV (l,L) à B bits représentatifs du numéro de quantification parmi NQ = $2^{\bar{B}}$ niveaux, chaque fois que le circuit de répartition de bits 3 délivre sur la sortie 360 de la porte ET 36 (Fig. 4) le mot B qui indique le nombre moyen de bits à affecter à un mot d'échantillon DP (l,L) transmis par le soustracteur 41 (Fig. 2). Le mot $\bar{B}$ est transmis à l'entrée commune 601 d'un circuit de détection de mots $\bar{B}$ 62 et d'une unité arithmétique 63. Le circuit 62 peut être par exemple un comparateur à 3 qui délivre un « 1 » sur sa sortie chaque fois qu'il détecte un mot tel que $\bar{B} \geqslant 3$. Dans ce cas, il ouvre une porte d'écriture ET 620 du codeur 6 et une porte d'écriture ET 720 du décodeur 7 (Fig. 7) afin de sélectionner les échantillons DP (l,L) en code MICD à 8 bits qui sont délivrés sur l'entrée numérique de la porte ET 620 par le soustracteur 41. Les mots DP (l, L) correspondant à $\bar{B} = 0$, comme indiqué à la dernière ligne du tableau III par exemple, sont sous-échantillonnés, c'est-à-dire ne sont pas transmis par fermeture de la porte ET 620 et correspondent à des mots de point P' (l,L) déduits par interpolation dans le circuit 8, comme on le verra en référence à la Fig. 10. L'unité arithmétique 63 comporte une unité de calcul 630 pour effectuer l'opération NQ = $2^{\bar{B}}$ et des diviseurs par 2 et 4, 631 et 632, un additionneur 633 et des soustracteurs 634, 635, 636 pour produire sur ses six sorties les nombres NQ/2, NQ/2-1, NQ/4, NQ/4-1, 3 NQ/4 et 3 NQ/4-1. Ces nombres servent au calcul de NIV (l,L) dans le codeur 6 et du mot d'échantillon après décodage DP' (l,L) dans le décodeur 7.

Comme déjà dit, les NQ niveaux sont équirépartis pour moitié dans l'intervalle [− $\bar{D}$, + $\bar{D}$] et dans le double intervalle [− DMAX, − $\bar{D}$ [+] $\bar{D}$, DMAX]. Le nombre NQ de niveaux est ainsi adapté par le codeur 6 au nombre de bits disponibles NB par ligne en fonction du nombre de points NP dans la zone ZI de la ligne L.

Toutes les opérations logiques dans le codeur et le décodeur sont établies avec des mots de 8 bits et les mots de sortie NIV (l,L) du codeur ont $\bar{B}$ bits respectivement pour chaque ligne, avec $\bar{B}$ qui est supérieur ou égal à un premier nombre prédéterminé par exemple égal à 3 et qui est inférieur ou égal à un second nombre prédéterminé par exemple égal à 6. Pour chaque point échantillonné, ces opérations ont une durée inférieure à τ.

On a supposé pour l'exemple de réalisation des codeur et décodeur montrés aux Fig. 6 et 7, que les numéros de niveaux sont dans l'ordre croissant de 0 à NQ − 1 pour des niveaux augmentant de − DMAX à DMAX et que le niveau de codage DP' (l,L) d'un échantillon DP (l,L) est égal au niveau de quantification médian de la plage de quantification à laquelle appartient DP (l,L). Bien entendu, d'autres répartitions et numérotations des niveaux peuvent être choisis, sous réserve que les décodeurs des parties émission et réception soient respectivement identiques.

Selon l'exemple ci-dessus, les relations suivantes donnent pour les trois intervalles d'équirépartition des niveaux, le numéro du niveau NIV (I,L) en fonction de l'échantillon DP (I,L) en code MICD et la valeur de l'échantillon correspondant DP' (I,L) en code MICD après quantification en fonction de NIV (I,L) ; SGN désigne le signe de DP (I,L) soit + 1 si DP $\geq$ 0 et − 1 si DP < 0, et les divisions sont entières.

a) Si − $\bar{D}$ $\leq$ DP $\leq$ $\bar{D}$ alors NQ/4 $\leq$ NIV < 3 NQ/4
NIV = [(DP × NQ/2 × 1/$\bar{D}$) + SGN] 1/2 + NQ/2 − 1
DP' = (NIV − (NQ/2 − 1)) × 4/NQ × $\bar{D}$.

b) si DP > $\bar{D}$ > 0 alors 3 NQ/4 $\leq$ NIV < NQ
NIV = ((DP − $\bar{D}$) × NQ/2 × 1/DMAX − $\bar{D}$ + SGN) 1/2 + 3 NQ/4 − 1
DP' = ((NIV − (3 NQ/4 − 1)) × 4/NQ × (DMAX − $\bar{D}$)) + $\bar{D}$.

c) si DP < − $\bar{D}$ < 0 alors 0 $\leq$ NIV < NQ/4
NIV = ((DP + $\bar{D}$) × NQ/2 × 1/DMAX − $\bar{D}$ + SGN) 1/2 + NQ/4 − 1
DP' = ((NIV − (NQ/4 − 1)) × 4/NQ × (DMAX − $\bar{D}$)) − $\bar{D}$.

Les tableaux suivants indiquent les numéros de quantification et les valeurs d'échantillon correspondants, NIV et DP', qui ont été calculés selon les relations précédentes pour des valeurs de $\bar{B}$ telles que $\bar{B}$ = 3 et $\bar{B}$ = 4.

### Tableau V ($\bar{B}$ = 3, NQ = 8)

| DP | NIV | DP' |
|---|---|---|
| [($\bar{D}$ + 3 DMAX)/4, DMAX] | 7 | DMAX |
| [(3$\bar{D}$ + DMAX)/4, ($\bar{D}$ + 3DMAX)/4[ | 6 | (DMAX + $\bar{D}$)/2 |
| [3$\bar{D}$/4, (3$\bar{D}$ + DMAX)/4[ | 5 | $\bar{D}$ |
| [$\bar{D}$/4, 3$\bar{D}$/4[ | 4 | $\bar{D}$/2 |
| ]− $\bar{D}$/4, $\bar{D}$/4[ | 3 | 0 |
| ]− 3$\bar{D}$/4, − $\bar{D}$/4] | 2 | − $\bar{D}$/2 |
| ](3$\bar{D}$ − DMAX)/4, − 3$\bar{D}$/4] | 1 | $\bar{D}$ |
| [− DMAX, (− 3$\bar{D}$-DMAX)/4] | 0 | − (DMAX + $\bar{D}$)/2 |

### Tableau VI ($\bar{B}$ = 4 ; NQ = 16)

| DP | NIV | DP' |
|---|---|---|
| [($\bar{D}$ + 7DMAX)/8, DMAX] | 15 | DMAX |
| [(3$\bar{D}$ + 5DMAX)/8, ($\bar{D}$ + 7DMAX)/8[ | 14 | ($\bar{D}$ + 3DMAX)/4 |
| [(5$\bar{D}$ + 3DMAX)/8, (3$\bar{D}$ + 5DMAX)/8[ | 13 | ($\bar{D}$ + DMAX)/2 |
| [(7$\bar{D}$ + DMAX)/8, (5$\bar{D}$ + 3DMAX)/8[ | 12 | (3$\bar{D}$ + DMAX)/4 |
| [7$\bar{D}$/8, (7$\bar{D}$ + DMAX)/8[ | 11 | $\bar{D}$ |
| [5$\bar{D}$/8, 7$\bar{D}$/8[ | 10 | 3$\bar{D}$/4 |
| [3$\bar{D}$/8, 5$\bar{D}$/8[ | 9 | $\bar{D}$/2 |
| [$\bar{D}$/8, 3$\bar{D}$/8[ | 8 | $\bar{D}$/4 |
| ]− $\bar{D}$/8, $\bar{D}$/8] | 7 | 0 |
| ]− 3$\bar{D}$/8, $\bar{D}$/8] | 6 | − $\bar{D}$/4 |
| ]− 5$\bar{D}$/8, − 3$\bar{D}$/8] | 5 | − $\bar{D}$/2 |
| ]− 7$\bar{D}$/8, − 5$\bar{D}$/8] | 4 | − 3$\bar{D}$/4 |
| ]−(7$\bar{D}$ + DMAX)/8, −(7$\bar{D}$/8] | 3 | $\bar{D}$ |
| ]−(5$\bar{D}$ + 3DMAX)/8, −(7$\bar{D}$ + DMAX)/8] | 2 | −(3$\bar{D}$ + DMAX)/4 |
| ]−(3$\bar{D}$ + 5DMAX)/8, −(5$\bar{D}$ + 3DMAX)/8] | 1 | −($\bar{D}$ + DMAX)/2 |
| [− DMAX, −(3$\bar{D}$ + 5DMAX)/8] | 0 | −($\bar{D}$ + 3DMAX)/4 |

Tel que montré à la Fig. 6, le codeur 6 comporte une voie principale dont les circuits logiques sont communs aux calculs de NIV (I,L) selon les trois cas précédents a, b, c, et sont interconnectés selon l'ordre des opérations de calcul de NIV (I,L). Ces circuits logiques ont trait d'abord à la distinction des trois cas, puis à une soustraction éventuelle de DP (I,L) et une multiplication par NQ/2, à la division par $\bar{D}$ ou (DMAX − $\bar{D}$) suivie de l'addition éventuelle d'un facteur tel que NQ/2-1, 3 NQ/4-1 ou NQ/4-1. Le signe

## 0 022 713

SGN de DP (I,L) est obtenu selon les opérations suivantes sur le bit de signe de DP (I,L) à l'état « 0 » si positif et à l'état « 1 » si négatif : négation en 621, multiplication par 2 en 622 et soustraction à l'unité en 623. Les ensembles de circuits effectuant ces quatre derniers calculs sont désignés respectivement avec les préfixes de numérotage 64, 65, 66 et 67 dans la Fig. 6. L'unité arithmétique 63 délivre NQ/2 à une entrée d'un multiplicateur 651 du codeur, NQ/2-1 à une entrée d'une porte ET 67a du codeur et 75a du décodeur, NQ/4 à l'entrée inverse (−) d'un soustracteur 740 du décodeur, et à une entrée d'un diviseur 752 du décodeur, NQ/4-1 à l'entrée numérique d'une porte ET 75c du décodeur, 3 NQ/4 à l'entrée inverse (−) d'un soustracteur 741 du décodeur, 3 NQ/4-1 à l'entrée numérique d'une porte ET 67b du codeur et à l'entrée numérique d'une porte ET 75b du décodeur. Les mémoires 57 et 59 de l'unité arithmétique 5 (Fig. 5) sont lues à la cadence $1/\tau$ après la détection du signal de synchronisation relatif à la ligne L + 2. La mémoire 57 délivre, à travers la liaison 570, la valeur moyenne $\bar{D}$ des échantillons DP (I,L) à l'entrée inverse (−) d'un soustracteur 640, à une entrée d'un additionneur 641 et à l'entrée numérique d'une porte ET 66a du codeur 6 et aux entrées numériques respectives de portes ET 76a, 77d et 77c du décodeur 7 (Fig. 7). La porte ET 77c reçoit en fait − D par l'intermédiaire d'un soustracteur à l'unité 770. La mémoire 59 délivre, à travers la liaison 590, la différence DMAX − $\bar{D}$ à l'entrée numérique d'une porte ET 66bc du codeur et à l'entrée numérique d'une porte ET 76bc du décodeur.

Le circuit logique 64 distinguant les trois cas a), b), c) comprend le soustracteur 640 et l'additionneur 641 qui ont leurs autres entrées reliées à la sortie de la porte ET d'écriture 620, et deux comparateurs à zéro 642 et 643 qui ont leurs entrées respectives recevant DP (I,L) − $\bar{D}$ à partir du soustracteur 640 et DP (I, L) + $\bar{D}$ à partir de l'additionneur 641. Les sorties de la porte ET 620, du soustracteur 640 et de l'additionneur 641 sont également reliées respectivement aux entrées numériques des portes ET 65a, 65b et 65c. Si DP (I,L) − $\bar{D}$ > 0 (cas b), la sortie du comparateur 642 est à l'état « 1 », et si DP (I,L) + $\bar{D}$ > 0 (cas a et b), la sortie du comparateur 643 est à l'état « 1 ». Ces deux signaux de sortie sont combinés au moyen de portes ET 64a, 64b et 64c pour commander les différentes opérations de calcul de NIV (I,L) selon les cas a, b et c. La porte de commande ET 64a a ses entrées respectives reliées à la sortie du comparateur 642 par l'intermédiaire d'un inverseur 644 et directement à la sortie du comparateur 643, et a sa sortie reliée aux entrées de commande des portes ET 65a, 66a et 67a. La porte de commande ET 64b a ses entrées reliées directement aux sorties des comparateurs 642 et 643 et sa sortie commandant l'ouverture des portes ET 65b et 67b et celle de la porte 66bc à travers une porte OU 660. La dernière porte de commande ET 64c a ses entrées respectives reliées aux sorties des comparateurs 642 et 643 à travers des inverseurs 644 et 645 et commande l'ouverture des portes ET 65c et 67c et celle de la porte ET 66bc à travers la porte OU 660.

La différence de DP (I,L) à la valeur nulle ou à $\bar{D}$ ou l'addition de DP (I,L) à $\bar{D}$ est transmise dans le circuit 65, à travers une porte OU 650 reliée aux sorties des portes ET 65a, 65b et 65c, vers l'autre entrée du multiplicateur par NQ/2, 651. La division du mot sortant du multiplicateur 651 par $\bar{D}$ ou (DMAX − $\bar{D}$) est effectuée dans un diviseur 661 dont l'autre entrée est reliée à travers une porte OU 662 aux sorties des portes ET 66a et 66bc. Le résultat de la division précédente est additionné à SGN dans un additionneur 663 et est ensuite divisé dans un diviseur par 2, 664. Le diviseur 664 est interconnecté entre la sortie de l'additionneur 663 et l'une des entrées d'un additionneur 670. Les sorties des portes ET 67a, 67b et 67c sont reliées à travers une porte OU 671 à l'autre entrée de l'additionneur 670 afin que celui-ci additionne le dernier terme NQ/2-1, 3 NQ/4-1 et NQ/4-1 selon les cas a, b et c. La sortie de l'additionneur 670, commune à la sortie 61 du codeur, transmet le numéro du niveau NIV (I,L) en code binaire pur à $\bar{B}$ bits vers l'entrée 70 du décodeur 7 (Fig. 7) et à travers une mémoire tampon 68, vers une entrée du circuit de multiplexage de la partie émission (Fig. 2). La mémoire tampon 68 permet d'adapter le débit numérique entrant à 17,778 Mbits/s au débit sortant à 2,048 Mbits/s. Pour ce faire, les mots NIV (I,L) délivrés par la sortie 61 sont écrits sous la commande du circuit de détection de $\bar{B}$ 62 et sont lus à la fréquence de 2,048 MHz. La capacité de la mémoire 68 est égale à $NP_{max}$ = NB/3.

En se reportant maintenant à la Fig. 7, le décodeur 7 comporte une voie principale dont les circuits logiques 74, 75, 76 et 77 sont communs aux calculs de DP' (I,L) selon les trois cas a, b et c. Ces circuits logiques se succèdent selon l'ordre des opérations élémentaires des relations indiquées plus haut.

Le circuit 74 a trait à la distinction des trois cas. Il comprend les soustracteurs 740 et 741 et deux comparateurs à zéro 742 et 743 dont les entrées sont respectivement reliées aux sorties des soustracteurs 740 et 741. Les entrées directes (+) des soustracteurs 740 et 741 ainsi que celle d'un soustracteur 750 sont reliées à la sortie de la porte ET d'écriture 720 dont l'entrée numérique 70 reçoit le mot NIV (I,L) sous la commande du signal de sortie du circuit de détection de mots $\bar{B}$ 62 (Fig. 6). Si NIV $\geqslant$ NQ/4 (cas a), la sortie du comparateur 742 est à l'état « 1 ». Si NIV $\geqslant$ 3 NQ/4 (cas b), la sortie 74b du comparateur 743 est à l'état « 1 ». Les entrées d'une première porte ET 74a qui commande le calcul de DP' (I,L) selon le cas a, sont reliées directement à la sortie du comparateur 742 et, à travers un inverseur 744, à la sortie du comparateur 743. La sortie de la porte ET 74a est reliée aux entrées de commande des portes ET 75a et 76a et à celle d'une porte ET 77a ayant son entrée numérique recevant la valeur nulle. Le calcul de DP' (I, L) selon le cas b est commandé directement par la sortie 74b du comparateur 743 qui est reliée aux entrées de commande des portes ET 75b et 77b et, à travers une porte OU 760, à celle de la porte ET 76bc. Enfin, le calcul de DP' (I,L) selon le cas c est commandé par un inverseur 74c dont l'entrée est reliée à la sortie du comparateur à zéro 742. La sortie de l'inverseur 74c est reliée aux entrées de commande des portes ET 75c et 77c et, à travers la porte OU 760, à la porte ET 76bc.

**0 022 713**

La différence de NIV (I,L) au nombre NQ/2-1, 3 NQ/4-1 ou NQ/4-1 est effectuée par le soustracteur 750 dont l'entrée inverse (−) est reliée, à travers une porte OU 751, aux sorties des portes ET 75a, 75b et 75c. La différence précédente est divisée par NQ/4 dans le diviseur 752 qui est interconnecté entre la sortie du soustracteur 750 et une entrée d'un multiplicateur 760. Ce multiplicateur 760 effectue le produit par $\bar{D}$ ou $(DMAX − \bar{D})$ qui est transmis à son autre entrée par les sorties des portes ET 76a et 76bc, à travers une porte OU 761. Le résultat de la multiplication est transmis à une entrée d'un additionneur 771. L'autre entrée de l'additionneur 771 reçoit la valeur 0, $\bar{D}$ ou $− \bar{D}$ par les sorties des portes 77a, 77b et 77c à travers une porte OU 772. La sortie de l'additionneur 771 est commune à celle 71 du décodeur 7 et transmet le mot à 8 bits DP′ (I,L) à l'autre entrée de l'additionneur 42, montré à la Fig. 2. L'additionneur 42 additionne DP′ (I,L) au mot de point prédit PP (I,L) par le prédicteur 4 afin de transmettre vers l'entrée 13 de la mémoire image 1, après interpolation et filtrage (Fig. 2), PC (I,L) = PP( (I,L) + DP′ (I,L), qui est peu différent de P (I,L) pour un point échantillonné ($DP′ \neq 0$) ou égal à PP(I,L) pour un point sous-échantillonné ($DP′ = 0$). Cette valeur d'échantillon PC (I,L) est ainsi obtenue après décodage et est enregistrée dans la mémoire d'image 1 en vue d'établir les échantillons prédits de la ligne suivante et/ou de l'image suivante.

Il apparaît de la description de la Fig. 6 que le codeur 6 adapte le nombre de bits du mot NIV (I,L) représentatif de l'échantillon au rapport $\bar{B}$ = NB/NP calculé dans le circuit de détection de mouvement 2 (Fig. 3). Ce nombre $\bar{B}$ est compris entre 3 et 6. Le circuit de multiplexage de la partie émission multiplexe dès la détection du signal de synchronisation de la ligne (L + 2) les mots contenus dans le préambule à 27 bits affecté à la ligne, qui sont :

— $x_1$ ($M_1$) et $x_2$ ($M_2$) transmis par les registres 275 et 276 (Fig. 3),
— $\bar{D}$ et DMAX − $\bar{D}$ transmis par les mémoires 57 et 50 (Fig. 5) et,
— éventuellement le mot de prédiction MP transmis par la sortie 43 du prédicteur 4 (Fig. 2) lorsque celui-ci est adaptatif. Puis, après la détection du signal de synchronisation de la ligne (L + 2) correspondant au début du codage des échantillons de la ligne L, le circuit de multiplexage reçoit la suite de mots NIV (I,L) succédant au préambule par la sortie 61 du codeur 6 qui, à travers la mémoire tampon 68, sont lus au débit de 2,048 Mbit/s.

Selon une seconde variante, les numéros des niveaux de quantification NIV (I,L) et les valeurs DP′ (I, L) pour chaque répartition de mots désignés par la valeur de $\bar{B}$ caractérisant la zone mobile ZI d'une ligne L sont figés, c'est-à-dire ont été préalablement enregistrés dans deux blocs de mémoires mortes.

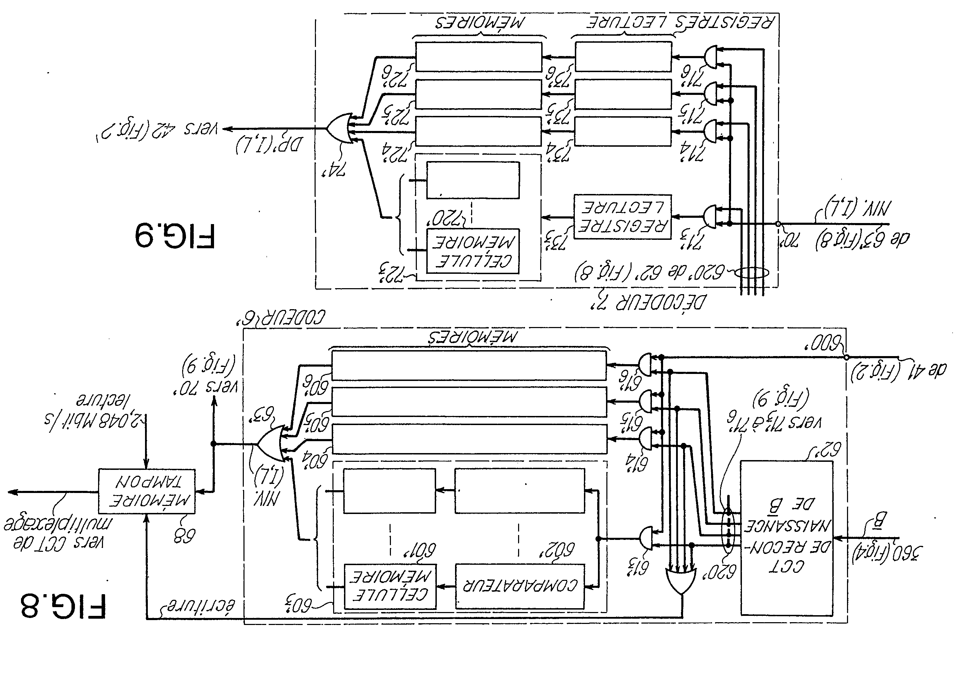

Le codeur 6′ selon cette seconde variante est montré à la Fig. 8. Il comprend par exemple quatre mémoires mortes $60′_3$, $60′_4$, $60′_5$ et $60′_6$. Ces mémoires comportent respectivement 8, 16, 32 et 64 cellules mémoires qui mémorisent chacune un numéro de niveau de quantification NIV à 3, 4, 5 et 6 bits respectivement. Chaque cellule d'une mémoire 601′ est adressée en lecture par un comparateur 602′ qui compare le mot d'échantillon DP (I,L) qui est transmis par la sortie du soustracteur 41 (Fig. 2) à l'entrée numérique commune 600′ de portes de commande de lecture ET $61′_3$, $61′_4$, $61′_5$, $61′_6$, aux limites prédéterminées de quantification correspondant au niveau NIV (I,L). Les portes ET $61′_3$ à $61′_6$ sont ouvertes sélectivement par un circuit 62′ de reconnaissance de $\bar{B}$ transmis par le circuit de répartition 3 (Fig. 4), à travers la liaison de sortie 360 du circuit de répartition de bits 3 (Fig. 4). Le circuit de reconnaissance 62′ compare $\bar{B}$ à 3, 4, 5 et 6 et, lorsque $\bar{B}$ est égal à l'un des chiffres précédents, commande à travers le bus 620′ l'ouverture de la porte ET correspondante $61′_3$ à $61′_6$. Ainsi, à chaque mot échantillonné en code MICD qui doit être transmis, l'une des cellules 601′ de la mémoire $60′_{\bar{B}}$ transmet à travers une porte OU 63′ le mot de numéro de niveau NIV (I,L) à $\bar{B}$ bits vers la mémoire tampon 68 et le circuit de multiplexage de la partie émission et vers l'entrée 70′ du décodeur 7′.

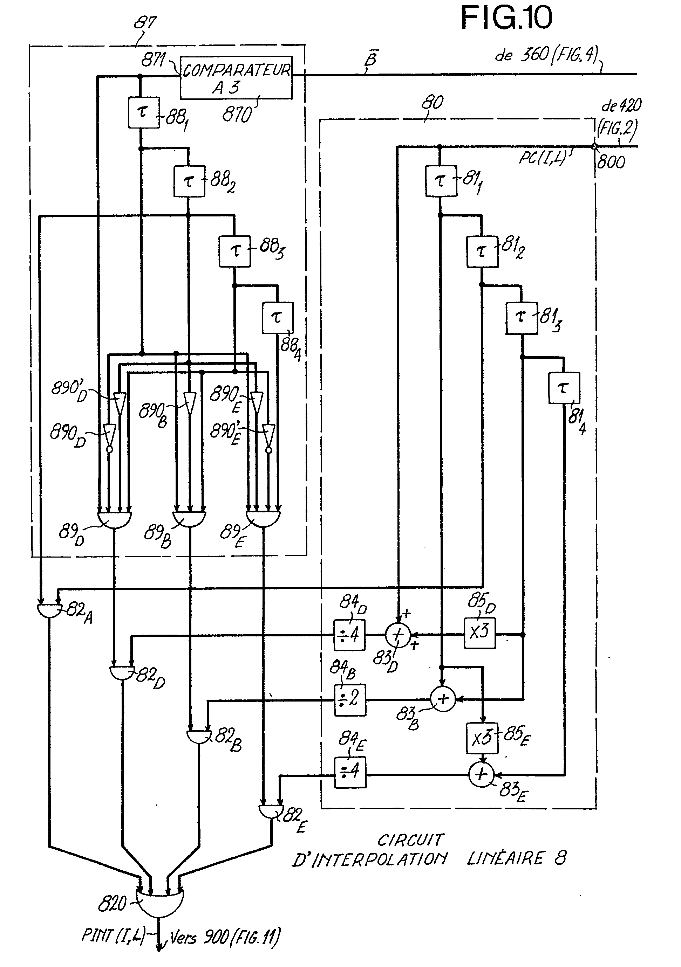

Le décodeur 7′ montré à la Fig. 9, selon cette seconde variante, comprend également 4 portes ET $71′_4$ à $71′_6$ dont les ouvertures sont commandées par le bus de sortie 620′ du circuit de reconnaissance de $\bar{B}$ 62′ et quatre mémoires mortes $72′_3$ à $72′_6$. Les mémoires $72′_3$ à $72′_6$ comportent respectivement 8, 16, 32 et 64 cellules mémoires 720′ contenant la valeur du niveau de quantification DP′ (I,L) à 8 bits correspondant au numéro de niveau NIV (I,L) mémorisé dans les cellules des mémoires respectives $60′_3$ à $60′_6$ du décodeur 6′. Chaque mémoire $72′_3$ à $72′_6$ est commandée en lecture par un registre $73′_3$ à $73′_6$. Un tel registre comporte des comparateurs à zéro et fait correspondre le numéro NIV (I,L) transmis par la porte ET correspondante $71′_3$ à $71′_6$ à l'adresse de la cellule mémoire correspondante 720′ en vue de lire le contenu DP′ (I,L) de celle-ci. Le mot DP′ (I,L) correspondant à NIV (I,L) sur l'entrée 70′ est transmis, à travers une porte de sortie OU 74′, par l'une des cellules des mémoires $72′_3$ à $72′_6$ vers l'autre entrée de l'additionneur 42 (Fig. 2).

On notera que, selon cette seconde variante, le dispositif de codage ne comporte plus l'unité arithmétique 5 et que le préambule affecté à une ligne est plus réduit car il ne comporte plus les mots $\bar{D}$ et DMAX − $\bar{D}$. En d'autres termes, le nombre de bits disponibles NB par ligne destiné au codage MICD des points de la ligne est plus grand que selon la première variante selon laquelle le codeur adapte les niveaux de quantification en fonction du nombre moyen de bits $\bar{B}$ par mot de point. En outre, le système de codage selon cette variante ne comporte plus qu'un registre à décalage $R_1$ dont la sortie est reliée à l'entrée 600′ du codeur MIC 6′ à travers le soustracteur 41. Le circuit de détection du mouvement 2 calcule $x_1$ et $x_2$ pendant la réception d'une ligne L dans le registre $R_1$. Puis, pendant la réception de la ligne suivante L + 1, le circuit 2 calcule NP et $\bar{B}$ et le codeur MIC 6′ code les mots DP (I,L).

Enfin, selon une autre variante de la présente invention, toujours en vue d'augmenter le nombre

moyen de bits $\bar{B}$ par mot transmis, le dispositif de codage ne reçoit à son entrée E qu'une trame sur deux, par exemple toutes les trames paires. La trame manquante de l'image est reconstituée dans le dispositif de décodage à la réception par duplication ou interpolation linéaire. Dans ce cas, les mémoires d'images du dispositif de codage (Fig. 2) et du système de décodage (Fig. 13) sont réduites à des mémoires de trame, c'est-à-dire ont une capacité égale à la moitié de celle 1 précédemment décrite. En outre, le nombre de bits N réservé à chaque ligne de la trame transmis est le double de celui selon la première variante, à savoir selon l'exemple de réalisation précité N = 2 × 258 = 516 bits. Parmi ces 516 bits, 54 bits sont assignés au préambule de la ligne et NB = 462 bits sont destinés au codage des points à transmettre, c'est-à-dire aux mots de niveau NIV (I,L). Par exemple, pour $\bar{B}$ = 3 Bits, 154 mots de niveau NIV (I,L) sont au plus transmis pour chaque ligne. Selon cette dernière variante, le dispositif de codage fonctionne comme il vient d'être décrit, à l'exception que les lignes sont traitées à la cadence de 2 × 7,825 = 15,650 kHz.

On se réfère maintenant aux Fig. 10 et 11 montrant une réalisation préférée du circuit d'interpolation 8 et du circuit de filtrage spatial conditionnel 9 qui sont interconnectés en série entre la sortie 420 de l'additionneur 42 transmettant le mot de point PC (I,L) = PP (I,L) + DP' (I,L) et l'entrée 13 de la mémoire d'image 1, comme ·montré à la Fig. 2. La valeur numérique PC (I,L) est sensiblement égale à P (I,L) transmis à l'entrée E du dispositif de codage à l'écart de quantification près correspondant dans le codeur et le décodeur 6-7 (ou 6'-7'), lorsque le point P (I,L) a été codé et sélectionné sous la commande du circuit de répartition de bits 3. Par contre, lorsque le point P (I,L) a été sous-échantillonné, c'est-à-dire non sélectionné et codé en référence par exemple à la dernière ligne du tableau III, ou appartient aux zones de fond $ZF_1$ et $ZF_2$ (Fig. 1), la sortie 420 de l'additionneur 42 fournit un mot tel que PC (I,L) = PP (I, L). Dans ce cas DP' (I,L) n'est pas calculé dans le décodeur 7 (ou 7') et il est nécessaire de retrouver une valeur voisine de la valeur réelle entrante P (I,L) par interpolation linéaire et filtrage conditionnel par rapport aux points transmis et codés en vue de la mémoriser dans la mémoire d'image 1 pour le traitement des lignes suivant la ligne précédemment traitée L.

L'interpolation linéaire est effectuée dans le circuit d'interpolation 8. Il permet la reconstitution des points sous-échantillonnés à partir des points PC (I,L) codés. Etant donné que le nombre de bits affectés à une ligne est égal à NB = 231 bits et que le nombre de bits affectés à chaque point échantillonné, c'est-à-dire à chaque mot de niveau NIV (I,L) transmis, est au moins égal à 3 bits, le nombre de points codés est au plus égal à $NP_{max}$ = 231/3 = 77. Si on ne considère par exemple que des sous-échantillonnages d'au plus d'ordre 3, le standard visiophonique ne devra pas comporter plus de 3 × 77 = 231 points d'image visibles. Le standard qui a été défini plus haut est la limite maximale pour un tel sous-échantillonnage. Bien entendu, d'autres standards ayant un nombre de points d'image visibles par ligne inférieur à 231 sont également possibles. Si le standard est par contre défini avec un nombre de points variables par ligne supérieur à 231, il faut considérer un sous-échantillonnage d'ordre 4, ou supérieur. Un tel sous-échantillonnage engendre parfois un flou de l'image et c'est pourquoi l'exemple de réalisation choisi se limite à un sous-échantillonnage d'ordre 3.

En référence à la Fig. 12, on a représenté une suite de points consécutifs A, B, C, D, E et F de la zone mobile ZI d'une ligne L. Les points tels que A, C et F, indiqués par une croix, sont échantillonnés et correspondent à la transmission d'un mot NIV (I,L) à la sortie du codeur 6 (ou 6'). Les points tels que B, D et E, indiqués par un rond, sont sous-échantillonnés et ne suscitent aucune transmission de mot NIV (I,L), c'est-à-dire aucune transmission de mot $\bar{B}$ par la sortie 360 du circuit de répartition de bits 3 (Fig. 4 et 6). Si NP $\leqslant$ NB/3, tous les points de la ligne dans la zone ZI sont codés, les mots NIV (I,L) comportent de 3 à 6 bits et on a à la sortie du circuit d'interpolation 8 : PINT (I,L) = PC (I,L). Si NP > NB/3, certains points sont échantillonnés et correspondent à des mots NIV (I,L) à 3 bits. Dans ce dernier cas, si NB/3 < NP $\leqslant$ 2 NB/3, on a uniquement un sous-échantillonnage d'ordre 2 correspondant à un point tel que B, et le mot d'interpolation est :

PINT (I,L) = PC (I,L) (point A) ou
PINT (I,L) = 1/2 [(PC − 1) (I,L) + (PC + 1) (I,L)] (point B)

et si 2 NB/3 < NP $\leqslant$ NB, on a un sous-échantillonnage au plus d'ordre 3, correspondant à des points tels que D et E, et le mot d'interpolation est :

PINT (I,L) = PC (I,L) (point A)
ou   PINT (I,L) = 1/2 [(PC − 1) (I,L) + (PC + 1) (I,L)] (point B)
ou   PINT (I,L) = 1/4 [3 (PC − 1) (I,L) + (PC + 2) (I,L)] (point C)
ou   PINT (I,L) = 1/4 [(PC − 2) (I,L) + 3 (PC + 1) (I,L)] (point E).

Ainsi, des relations précédentes, il apparaît que la valeur interpolée PINT (I,L) d'un point sous-échantillonné ne dépend que de celles des points réellement codés en code MICD et non pas des valeurs prédites PP (I,L) transmises par la sortie 40 du prédicteur 4.

Tel que montré à la Fig. 10, le circuit d'interpolation 8 comprend un circuit 80 pour le calcul des quatre relations précédentes et un circuit 87 pour sélectionner l'une de ces relations en fonction du type de sous-échantillonnage.

# 0 022 713

L'entrée 800 du circuit de calcul 80 reçoit en série à la fréquence $1/\tau$ les mots PC (I,L) transmis par la sortie 420 de l'additionneur 42. L'entrée 800 est reliée à quatre lignes de retard en série $81_1$, $81_2$, $81_3$ et $81_4$ retardant chaque mot PC (I,L) de $\tau$. La ligne de retard $81_2$ transmet directement le mot PC (I,L) vers une porte de lecture $82_A$, qui est ouverte pour un point tel que A. Un additionneur $83_B$ a ses entrées reliées aux sorties des lignes de retard $81_1$ et $81_3$ et a sa sortie reliée à l'entrée d'une porte de lecture $82_B$ à travers un diviseur par deux $84_B$. Par suite, la sortie du diviseur $84_B$ fournit PINT (I,L) selon l'interpolation relative au point B. Un second additionneur $83_D$ a une entrée reliée directement à l'entrée 800 du circuit d'interpolation et une autre entrée reliée à la sortie de la ligne de retard $81_3$ à travers un multiplicateur par trois $85_D$. Un diviseur par quatre $84_D$ est relié à la sortie de l'additionneur $83_D$ et transmet vers une entrée d'une porte de lecture ET $82_D$ un mot d'interpolation PINT (I,L) relatif à un point tel que D. Enfin, un troisième additionneur $83_E$ a une entrée reliée à la sortie de la ligne de retard $81_1$, à travers un multiplicateur par trois $85_E$, et a son autre entrée reliée à la sortie de la ligne de retard $81_4$. Un diviseur par quatre $84_E$ est relié à la sortie de l'additionneur $83_E$ et délivre à l'entrée numérique d'une porte de lecture $82_E$ un mot PINT (I,L) selon la relation d'interpolation d'un point tel que E.

Le circuit de sélection 87 comprend du côté de son entrée un comparateur à trois 870 qui reçoit à travers la liaison 360 des mots $\bar{B}$ provenant du circuit de répartition de bits 3 (Fig. 4). On rappelle qu'à chaque mot $\bar{B}$ égal au moins à 3 correspond le codage d'un mot de point à être transmis par la sortie du codeur 6 (ou 6') et la transmission d'un mot DP' (I,L) par la sortie du décodeur 7 (ou 7') vers l'additionneur 42. Si un mot $\bar{B}$ est détecté, la sortie 871 du comparateur 870 est à l'état « 1 » pendant $\tau$, correspondant à un point échantillonné tel que A, C ou F (Fig. 12). Si un point est sous-échantillonné, aucun mot $\bar{B}$ n'est transmis par le circuit de répartition de bits 3 et la sortie du comparateur est à l'état « 0 » pendant $\tau$.

Le circuit de sélection 87 comprend également quatre lignes de retard de $\tau$, $88_1$ à $88_4$, qui sont reliées en série à la sortie 871 du comparateur 870. La sortie de la seconde ligne de retard $88_2$ commande directement l'ouverture de la porte $82_A$ pour transmettre un mot d'interpolation PINT (I,L) = PC (I,L) correspondant à un point échantillonné tel que A, c'est-à-dire chaque fois qu'un mot $\bar{B}$ est reçu par le comparateur 870. Une porte ET $89_B$ a trois entrées dont une est reliée à la sortie de la ligne de retard $88_2$ à travers un inverseur $890_B$ et dont deux sont reliées directement aux sorties des lignes de retard $88_1$ à $88_3$. La sortie de la porte ET $89_B$ est à l'état « 1 » pour ouvrir la porte ET $82_B$ qui transmet un mot PINT (I, L) = 1/2 [(PC − 1) (I,L) + (PC + 1) (I,L)] chaque fois que deux mots consécutifs $\bar{B}$ reçu par le comparateur 870 sont espacés de 2 $\tau$ ; ceci correspond à un point sous-échantillonné d'ordre 2, tel que B. Une seconde porte ET $89_D$ a quatre entrées dont deux sont directement reliées à la sortie 871 du comparateur 870 et à la sortie de la ligne de retard $88_3$, et dont deux autres sont reliées aux sorties des lignes de retard $88_1$ et $88_2$ à travers des inverseurs $890_D$ et $890'_D$. Une troisième porte ET $89_E$ a quatre entrées dont deux sont directement reliées aux sorties des lignes de retard $88_1$ et $88_4$ et dont deux autres entrées sont reliées aux sorties des lignes de retard $88_2$ et $88_3$ à travers deux inverseurs $890_E$ et $890'_E$. On voit que les portes ET $89_D$ et $89_E$ sont ouvertes successivement pendant deux points consécutifs sous-échantillonnés d'ordre 3. Chaque fois que le comparateur 870 a détecté deux mots $\bar{B}$ consécutifs espacés de 3 $\tau$, la porte ET $89_D$ commande l'ouverture de la porte ET $82_D$ pour transmettre un mot d'interpolation PINT (I, L) = 1/4 [3 (PC − 1) (I,L) + (PC + 2) (I,L)], correspondant à un point tel que D ; puis, après une durée $\tau$, la porte ET $89_E$ commande l'ouverture de la porte $82_E$ pour transmettre un mot d'interpolation PINT (I, L) = 1/4 [(PC − 2) (I,L) + 3 (PC + 1) (I,L)] correspondant à un point tel que E. Une porte OU 820 est reliée aux sorties des portes ET $82_A$, $82_C$, $82_D$ et $82_E$ et transmet successivement à chaque période un mot d'interpolation PINT (I,L) vers l'entrée 900 du circuit de filtrage 9.

Le circuit de filtrage spatial conditionnel 9 joue le rôle d'un filtre passe-bas afin que le signal reconstitué dans la partie réception soit affranchi, après conversion numérique analogique, des repliements de spectre et des contours en escalier de l'image mobile I sur le fond F. Si la ligne L n'est pas assujettie à un sous-échantillonnage (NP ⩽ NB/3), le circuit 9 délivre directement, pour chacun des NP points de la ligne le mot P' (I,L) = PINT (I,L) à l'entrée 13 de la mémoire d'image 1. Par contre, si la ligne est sous-échantillonnée, le circuit de filtrage 9 transmet à l'entrée 13 de la mémoire d'image 1, pour chacun des NP points de la ligne L, P' (I,L) = 1/4 [(PINT − 1) (I,L) + 2 PINT (I,L) + (PINT + 1) (I,L)] pour un sous-échantillonnage d'ordre 2 (NB/3 < NP ⩽ 2 NB/3), et P' (I,L) = 1/2 [(PINT − 1) (I,L) + (PINT + 1) (I,L)] pour un sous-échantillonnage d'ordre 3 (2 NB/3 < NP ⩽ NB).

Le circuit de filtrage spatial conditionnel 9 montré à la Fig. 10 comprend essentiellement un circuit de calcul 90 pour effectuer les trois relations précédentes et un circuit 95 pour sélectionner les filtrages selon les trois relations.

L'entrée 900 du circuit de calcul 90 reçoit en série à la fréquence $1/\tau$ les mots d'interpolation PINT (I, L) transmis par la porte de sortie OU 820 du circuit d'interpolation 8. L'entrée 900 est reliée à deux lignes de retard de $\tau$ 911 et 912 connectées en série et à une entrée d'un additionneur $92_3$. La sortie de la ligne de retard 911 délivre directement P' (I,L) à l'entrée numérique d'une porte ET de lecture $94_1$, qui est relative à une ligne non sous-échantillonnée, et à l'une des entrées d'un additionneur $92_2$. L'additionneur $92_3$ a son autre entrée reliée à la ligne de retard 912 et transmet à l'entrée numérique d'une porte ET de lecture $94_3$, à travers un diviseur par 2, $93_3$, P' (I,L) selon la relation du sous-échantillonnage d'ordre 3. L'additionneur $92_2$ a son autre entrée reliée à la sortie du diviseur $93_3$ et fournit à une entrée d'une porte ET de lecture $94_2$, à travers un diviseur par 2, $93_2$, P' (I,L) selon la relation du sous-

16

## 0 022 713

échantillonnage d'ordre 2. Les ouvertures des trois portes ET $94_1$ à $94_3$ sont commandées sélectivement par les trois sorties du circuit de sélection de filtrage 95.

Du côté de son entrée 950, le circuit de sélection de filtrage 95 comporte deux comparateurs 951 et 952 qui reçoivent, au début du codage de chaque ligne, le nombre de points NP de la zone d'image ZI qui est délivré par le registre 285 du circuit de détection de mouvement 2 (Fig. 3). Le comparateur 951 compare NP à NB/3 et met à l'état « 1 » sa sortie si $NP > NB/3$. Le comparateur 952 compare NP à 2 NB/3 et met à l'état « 1 » sa sortie si $NP > 2 NB/3$. Lorsque $NP \leqslant NB/3$, la sortie du comparateur 951 est à l'état « 0 » et commande à travers un inverseur $96_1$ l'ouverture de la porte ET $94_1$, ce qui correspond à une ligne L non sous-échantillonnée. Une porte ET 97 a une entrée reliée directement à l'entrée du comparateur 951 et une autre entrée reliée, à travers un inverseur $96_2$, à l'entrée de l'autre comparateur 952. Lorsque $NB/3 < NP \leqslant 2 NB/3$ est satisfaite, la sortie de la porte ET 97 est à l'état « 1 » et commande l'ouverture de la porte ET $94_2$ relative au filtrage d'une ligne sous-échantillonnée d'ordre 2. Enfin, lorsque $NP > 2 NB/3$, la sortie du comparateur 952 est à l'état « 1 » et commande directement l'ouverture de la porte ET $94_3$ relative au filtrage d'une ligne sous-échantillonnée d'ordre 3. La sortie de l'une des portes ET de lecture $94_1$, $94_2$ et $94_3$ transmet en série, à travers une porte OU 98, la série des NP mots P' (I,L) convenablement filtrée de la ligne traitée L vers l'entrée 13 de la mémoire d'image 1 en vue de leur mémorisation. Les autres mots de point relatifs aux zones de fond $ZF_1$ et/ou $ZF_2$, si elles existent, ne sont pas modifiés dans la mémoire d'image 1, celle-ci étant commandée en écriture par des moyens (non représentés) uniquement pendant la transmission de la largeur $x_2 - x_1$ de la zone mobile ZI de chaque ligne.

Le dispositif de décodage de la partie réception est montré sous forme de bloc-diagramme à la Fig. 13. Il effectue les mêmes opérations de répartition de bits, de décodage, de prédiction, d'interpolation et de filtrage que celles réalisées dans le dispositif de codage de la partie émission.

Du côté de son entrée, il reçoit après démultiplexage des données transmises sur la voie numérique TN 1 à 2,048 Mbit/s, les mots du préambule de la ligne, tels que $x_1$, $x_2$, DMAX-$\bar{D}$, $\bar{D}$ et éventuellement MP et les mots informatifs NIV (I,L) représentatifs des points codés par le dispositif de codage de la partie émission du locuteur distant. Toutes les opérations nécessaires au calcul des paramètres de décodage des mots de niveau NIV (I,L) sont effectués pendant l'intervalle de temps précédant le signal vidéo et propre à la reconstitution du signal de synchronisation de ligne. On rappelle que tous les circuits de reconstitution du signal de synchronisation et de suppression de lignes et du signal de synchronisation et de suppression de trame ainsi que la base de temps transmettant les signaux de supervision propres au décodage ne seront pas détaillés.

On notera dès maintenant que les blocs de la Fig. 13 désignés par les repères numériques avec l'indice r sont identiques aux blocs à mêmes repères numériques de la partie émission. Les mots de coordonnées $x_1$ et $x_2$ indiquant le début $M_1$ et la fin $M_2$ de la zone ZI de la ligne L sont transmis aux entrées $281_r$ et $282_r$ d'une unité arithmétique $28_r$ ; le mot $x_1$ est également délivré à l'entrée de décomptage du décompteur $30_r$ d'un circuit de répartition de bits $3_r$. L'unité arithmétique $28_r$ calcule, comme l'unité 28 du circuit de détection de mouvement 2, le nombre de bits moyen $\bar{B}$ qui a été affecté à chaque mot NIV (I,L) et le nombre de points NP de la zone mobile ZI de la ligne L. Son registre $289_r$ transmet $\bar{B}$ à l'entrée numérique de la porte ET $36_r$ d'un circuit de répartition de bits $3_r$, analogue à celui 3 de la Fig. 4, et son registre $285_r$ transmet NP à l'entrée d'initialisation du décompteur 32r et à l'une des entrées du circuit de multiplication par NP $33_r$ du circuit de répartition de bits $3_r$ et à l'entrée $950_r$ d'un circuit de filtrage spatial conditionnel $9_r$ analogue à celui 9 de la Fig. 11. Comme à l'émission, le circuit de répartition de bits $3_r$ délivre sur son bus de sortie $360_r$ le mot $\bar{B}$ chaque fois qu'un point a été échantillonné, c'est-à-dire au plus $NP_{max} = 77$ fois par ligne. Cette transmission de mots $\bar{B}$ a lieu dès le début de la partie vidéo de la ligne à reconstituer. Chaque mot $\bar{B}$ est délivré, à travers le bus $360_r$, au comparateur à $3,870_r$ d'un circuit d'interpolation linéaire $8_r$, analogue à celui 8 de la Fig. 10, et à l'entrée commune $601_r$ d'un circuit de détection de $\bar{B}$ $62_r$ et d'une unité arithmétique $63_r$ qui sont respectivement analogues à ceux 62 et 63 du codeur 6 montré à la Fig. 6. La sortie de l'unité $63_r$ délivre les coefficients fonction de $NQ = 2^B$ tels que NQ/4, NQ/4-1, NQ/2-1, 3 NQ/4 et 3 NQ/4-1 aux entrées adéquates d'un décodeur MIC $7_r$ analogue à celui 7 de la Fig. 7.

Etant donné que les mots NIV (I,L) sont convoyés en série par la voie numérique TN1 à 2,048 Mbits/s, il est nécessaire de prévoir une mémoire tampon $68_r$ ayant une capacité $NP_{max} = NB/3$. Dans cette mémoire tampon $68_r$, les bits des mots NIV (I,L) sont écrits à la fréquence de 2,048 Mbits/s et chaque mot NIV (I,L) est lu pendant une durée $\tau$ sous la commande du signal de lecture 621 délivré par le circuit de détection de $\bar{B}$ $62_r$. Les mots NIV (I,L) ainsi lus sont transmis à l'entrée $70_r$ du décodeur $7_r$ et correspondent uniquement aux points échantillonnés tels que A, C et F montrés à la Fig. 12. Les mots $\bar{D}$ et DMAX-$\bar{D}$ du préambule de ligne fournis par le circuit de démultiplexage de la partie réception sont également enregistrés dans deux registres tampons $57_r$ et $59_r$ dès la détection du préambule de la ligne L et sont transmis sous la commande du signal de lecture 621 aux entrées adéquates du décodeur $7_r$, via les bus $570_r$ et $590_r$. Le décodeur $7_r$ calcule un niveau de quantification DP' (I,L) chaque fois que son entrée $70_r$ a reçu un mot de niveau NIV (I,L).

Puis, comme dans le dispositif de codage de la partie émission, DP' (I,L) est additionné dans un additionneur $42_r$ au mot prédit correspondant PP (I,L) fourni par la sortie $40_r$ d'un prédicteur linéaire $4_r$ analogue à celui 4 du dispositif de codage. Ce prédicteur $4_r$ reçoit éventuellement sur son entrée $43_r$ un

17

**0 022 713**

mot d'indication de prédiction MP par le circuit de démultiplexage, lequel mot a été inclus dans le préambule de la ligne. On notera que, comme dans le dispositif de codage, les mots prédits PP (I,L) sont établis à partir des niveaux de quantification calculés dans le codeur 6 (Fig. 6) et sélectionnés sous la commande des circuits de répartition de bits 3 (Fig. 4) et $3_r$. La sortie $420_r$ de l'additionneur $42_r$ fournit les mots décodés PC (I,L) = PP (I,L) + DP' (I,L) à l'entrée $800_r$ du circuit d'interpolation linéaire $8_r$. Puis, après interpolation en fonction de l'ordre de sous-échantillonnage, la porte OU de sortie $820_r$ du circuit $8_r$ délivre PINT (I,L) à l'entrée $900_r$ du circuit de filtrage spatial conditionnel $9_r$, la porte de sortie OU $98_r$ duquel fournit P' (I,L) à l'entrée $13_r$ de la mémoire d'image $1_r$ du dispositif de décodage. La sortie $11_r$ de la mémoire $1_r$ transmet à l'entrée $44_r$ du prédicteur $4_r$ les mots de point P' (I,L) servant au calcul du mot prédit PP (I,L) selon l'une des quatre relations de prédiction 1 à 4, et ce à la fréquence $1/\tau$. La sortie de lecture 14 de la mémoire d'image $1_r$ transmet également en série à la fréquence $1/\tau$ les mots P' (I,L) vers la partie vidéo (écran) du visiophone après conversion numérique-analogique.

On notera que, dans le cas de la seconde variante (Fig. 8 et 9) du dispositif de codage relative à des niveaux de quantification statiques mais néanmoins sélectionnés en fonction du nombre moyen de bits $\bar{B}$ à affecter à un mot NIV (I,L), le dispositif de décodage ne comporte pas d'unité arithmétique $63_r$ et de registres tampons $57_r$ et $59_r$ et a son décodeur MIC analogue à celui illustré à la Fig. 9. Enfin, selon la variante concernant un nombre de bits disponibles NB égal à 462 et au codage d'une trame sur deux, la mémoire $1_r$ du dispositif de décodage est une mémoire de trame ayant une capacité réduite de moitié. La sortie, côté vidéo, de cette mémoire de trame est reliée à un circuit de duplication ou de reconstitution des trames manquantes.

Bien que l'invention ait été décrite en référence à un standard visiophonique particulier, d'autres réalisations sont également concevables par l'homme de métier avec d'autres débits numériques entrant et sortant ayant des rapports supérieur ou inférieur à 8 et avec des formats de mots de point entrants différents de 8. En outre, la voie numérique de transmission peut convoyer d'autres signaux informatifs secondaires, tels qu'un canal destiné à la télécopie par exemple. En général, l'ordre du sous-échantillonnage peut être supérieur à 3 et le nombre de bits N réservé à une ligne d'image peut être quelconque, mais cependant défini en dépendance des débits numériques entrant et sortant. Les informations transmises dans le préambule de chaque ligne sont telles qu'elles sont suffisantes pour permettre le décodage convenable à la réception. Selon la première variante, elles peuvent inclure, en outre, $x_1$, $x_2$ ; $x_1$, $x_2 - x_2$ ; $\bar{B}$, NP ; ou NQ, NP par exemple.

Par ailleurs, le signal visiophonique peut être un signal numérique qui est représentatif d'images monochromes noires et blanches ou un signal composant numérique représentatif d'une composante chromatique ou de luminance d'un signal vidéo d'images en couleurs. Dans ce dernier cas, trois ensembles de dispositif de codage et de dispositif de décodage sont prévus en parallèle.

**Revendications**

1. Dispositif de codage d'un signal visiophonique numérique à un débit élevé donné, constitué de mots d'un nombre de bits prédéterminé représentatifs des points consécutifs d'une image analysée, en un signal codé MIC transmis sur une voie numérique à débit faible convoyant des mots représentatifs de points d'image dont les niveaux ont varié, relativement à ceux correspondants de l'image précédente, ledit dispositif de codage comprenant une mémoire d'image (1), des moyens (2) pour détecter, par comparaison de la différence des mots de deux points correspondants d'une image et de l'image précédente mémorisée à un seuil prédéterminé (S), le mouvement de l'image (I) par rapport à l'image précédente mémorisée (I − 1), un prédicteur linéaire (4) dont l'entrée est reliée à la mémoire d'image (1), des moyens (3) commandés par les moyens de détection de mouvement (2) pour sélectionner tout ou partie des points variables, des moyens (41, 6) recevant en synchronisme les mots de point (P) du signal visiophonique et les mots prédits (PP) par le prédicteur (4) pour coder, selon une loi de quantification prédéterminée, les mots en code MICD représentatifs de tout ou partie des points variables afin de multiplexer les mots en code MICD dans ladite voie numérique, et des moyens (8) pour interpoler linéairement les mots des autres points non sélectionnés de l'image à partir de mots transmis afin de mémoriser les mots de points correspondant aux mots codés et les mots interpolés dans la mémoire d'image (1), caractérisé en ce que, le nombre de bits informatifs NB alloués à chaque ligne (L) d'une image (I) dans la voie numérique étant constant et le nombre de bits moyen ($\bar{B}$) alloués à chaque mot du signal codé (NIV) d'une ligne étant plus grand ou égal à un premier nombre entier prédéterminé (trois), les moyens de détection de mouvement (2) produisent, pour chaque ligne (L) d'une image (I), les coordonnées ($x_1$, $x_2$) des deux points ($M_1$, $M_2$) délimitant la zone mobile (ZI) de l'image (I) par rapport à la ligne correspondante (L) de l'image précédente (I − 1) pour en déduire le nombre NP des points de la zone mobile (ZI) de la ligne susceptibles d'être codés et ledit nombre de bits moyen $\bar{B}$ et en ce que les moyens de sélection (3) comprennent des premiers et seconds moyens de décomptage (31, 32) ayant leurs comptes $C_1$, $C_2$ initialisés au début de la zone mobile (ZI) de chaque ligne à NB et NP et décomptant à la fréquence des points de ligne le nombre de bits restant à allouer à ladite ligne et le nombre de points restants susceptibles d'être codés et des moyens de comparaison (35) des comptes desdits premiers et seconds moyens de décomptage (31, 32) pour commander l'écriture dans lesdits moyens de codage (6)

18

des mots MICD (NIV) représentatifs des points à transmettre chaque fois que $C_1/\bar{B} \geqslant C_2$.

2. Dispositif de codage conforme à la revendication 1, caractérisé en ce que les moyens de détection de mouvement (2) comprennent, en outre, des moyens (277) initialisés au début de chaque ligne pour compter les points de ladite ligne et des moyens (26, 271, 272) pour commander la lecture desdits moyens de comptage (277) lorsque les valeurs absolues de différence d'un nombre prédéterminé de points consécutifs des deux lignes correspondantes de l'image transmise et de l'image précédente sont supérieures audit seuil (S) et lorsque les différences relatives auxdits points consécutifs sont de même signe afin de produire les coordonnées $x_1$, $x_2$ desdits deux points ($M_1$, $M_2$) limitant la zone mobile (ZI) de ladite ligne transmise.

3. Dispositif de codage conforme à la revendication 1 ou 2, caractérisé en ce que les moyens de détection de mouvement (2) comprennent des moyens de comparaison (287) pour que le nombre de bits moyen $\bar{B}$ alloués à chaque mot codé (NIV) soit inférieur ou égal à un second nombre entier prédéterminé (six).

4. Dispositif de codage conforme à l'une des revendications 1 à 3, dans lequel les moyens de codage des mots MICD (6, 7 ; 6', 7') comprennent un codeur (6 ; 6') pour transmettre relativement à chaque mot de point MICD sélectionné (DP) un mot MIC à $\bar{B}$ bits (NIV) qui est représentatif du numéro du niveau de quantification du mot MICD et qui est multiplexé dans la voie numérique, caractérisé en ce que les moyens de codage comprennent également un décodeur (7 ; 7') relié au codeur (6 ; 6') pour produire, pour chaque mot de niveau à $\bar{B}$ bits (NIV), un mot MIC à un nombre de bits prédéterminé (DP') qui est représentatif de l'amplitude du niveau de quantification dudit mot MICD (DP) et qui est transmis, à travers des moyens d'addition (42) au mot prédit correspondant (PP), vers lesdits moyens d'interpolation (8).

5. Dispositif de codage conforme à la revendication 4, caractérisé en ce qu'il comprend des moyens (5) pour calculer les valeurs maximale DMAX et moyenne $\bar{D}$ de mots (P-PP') en code MICD de tous les points de ladite zone mobile (ZI) d'une ligne (L) et en ce que les moyens de codage (6, 7) sélectionnent pour chaque ligne une loi de quantification, telle que les niveaux de quantification sont équirépartis pour moitié entre $-\bar{D}$ et $+\bar{D}$ et pour moitié entre $-$ DMAX et $-\bar{D}$ et entre $\bar{D}$ et DMAX et sont en nombre (NQ) égal à $2^{\bar{B}}$, et calculent le niveau de quantification correspondant à cette loi pour chaque mot de point MICD sélectionné de ladite ligne.

6. Dispositif de codage conforme à la revendication 5, comprenant des moyens de retard, caractérisé en ce que les moyens de retard ($R_1$, $R_2$) retardent chaque ligne du signal visiophonique d'une durée de deux lignes et en ce que, pour chaque ligne, les moyens de détection de mouvement (2) calculent $x_1$ et $x_2$ pendant la réception de ladite ligne, les moyens (5) de calcul des valeurs maximale DMAX et moyenne $\bar{D}$ effectuent ledit calcul pendant la réception de la première ligne suivante et les moyens de codage (6, 7) codent lesdits mots MICD sélectionnés pendant la réception de la seconde ligne suivante.

7. Dispositif de codage conforme à la revendication 5 ou 6, caractérisé en ce que les moyens de calcul des valeurs maximale DMAX et moyenne $\bar{D}$ (5) comprennent des moyens de prédiction (50) qui sont analogues audit prédicteur linéaire (4) et qui calculent sous la commande des moyens de détection de mouvement (2) lesdits mots en code MICD (P-PP') de tous les points de ladite zone mobile (ZI) d'une ligne à partir des mots des points correspondants transmis par le signal visiophonique (P) et des mots de points déterminés par la prédiction relatifs à des mots transmis et éventuellement retardés du signal visiophonique et à des mots codés et/ou interpolés mémorisés dans la mémoire d'image (1).

8. Dispositif de codage conforme à la revendication 4, dans lequel le codeur (6') comprend des moyens (60') pour mémoriser les numéros de niveau (NIV) d'une pluralité de loi de quantification, caractérisé en ce que le décodeur (7') comprend des moyens (72') pour mémoriser les mots (DP') représentatifs des amplitudes des niveaux desdites lois de quantification et en ce que lesdits moyens de comparaison (35) sélectionnent en fonction du nombre moyen de bits $\bar{B}$ et pour chaque mot de point en code MICD sélectionné (DP) une paire de moyens de mémorisation (60', 72') relatifs à une loi de quantification à $2^{\bar{B}}$ niveaux pour que le codeur (6') produise un mot MIC de numéro de niveau (NIV) par comparaison du mot de point MICD sélectionné (DP) aux amplitudes de niveaux de ladite loi de quantification et pour que le décodeur (7') produise un mot MICD représentatif d'un niveau (DP') par comparaison du numéro de niveau produit (NIV) aux numéros de niveaux de ladite loi de quantification.

9. Dispositif de codage conforme à la revendication 8, comprenant des moyens de retard, caractérisé en ce que les moyens de retard ($R_1$) retardent chaque ligne du signal visiophonique d'une durée d'une ligne et en ce que, pour chaque ligne, les moyens de détection de mouvement (2) calculent les coordonnées ($x_1$, $x_2$) pendant la réception de ladite ligne et les moyens de codage (6') codent lesdits mots MICD sélectionnés pendant la réception de la ligne suivante.

10. Dispositif de codage conforme à l'une des revendications 4 à 9, caractérisé en ce que les moyens d'interpolation linéaire (8) comprennent des moyens (87) commandés par lesdits moyens de sélection (3) pour distinguer les points codés transmis et l'ordre de sous-échantillonnage des points sous-échantillonnés non transmis de la zone mobile de chaque ligne, l'ordre de sous-échantillonnage pouvant être supérieur ou égal à deux, et des moyens (80) reliés à la sortie des moyens d'addition (42) pour interpoler linéairement chaque mot de point sous-échantillonné en fonction de son ordre de sous-échantillonnage et des mots de points transmis immédiatement voisins.

11. Dispositif de codage conforme à l'une des revendications 1 à 10, caractérisé en ce qu'il comprend des moyens de filtrage numérique passe-bas (9), interconnectés entre les moyens d'interpola-

**0 022 713**

tion linéaire (8) et l'entrée de ladite mémoire d'image (1), pour filtrer uniquement les mots de points codés transmis et sous-échantillonnés.

12. Dispositif de codage conforme à la revendication 11, caractérisé en ce que les moyens de filtrage (9) filtrent sélectivement les mots de chaque ligne par comparaison (95) du nombre NP de points de la zone mobile de la ligne audit nombre constant NB de bits en fonction (90) de l'ordre de sous-échantillonnage maximal susceptible d'être produit par le codage des mots MICD de ladite ligne.

13. Dispositif de codage conforme à l'une des revendications 1 à 12, caractérisé en ce que le signal visiophonique entrant dans le dispositif de codage convoie d'une manière connue une trame sur deux ou plus et que la mémoire d'image est une mémoire de trame.

14. Dispositif de codage conforme à l'une des revendications 1 à 13, dans lequel le nombre de bits N alloués à chaque ligne dans la voie numérique comprend un nombre de bits prédéterminé précédant le nombre de bits informatifs NB et affectés à un préambule destiné à convoyer au moins un mot MIC de synchronisation de ligne, et éventuellement, des mots indiquant certaines discriminations relatives au codage et à la prédiction de la ligne, caractérisé en ce que le préambule contient, en outre, deux mots représentatifs des coordonnées des points limitant ladite zone mobile de la ligne.

15. Dispositif de décodage destiné à recevoir par l'intermédiaire de la voie numérique à débit faible le signal MIC codé par le dispositif de codage conforme à l'une des revendications 1 à 14, comprenant une mémoire d'image $(1_r)$, un prédicteur linéaire $(4_r)$ dont l'entrée est reliée à la mémoire d'image $(1_r)$, des moyens $(7_r)$ pour décoder les mots de point codés, transmis par le dispositif de codage, en mots codés en code MICD et des moyens $(8_r)$ pour interpoler linéairement les mots de point non transmis à partir des mots MIC de points transmis et décodés afin de mémoriser les mots décodés et interpolés MIC dans la mémoire d'image $(1_r)$, caractérisé en ce qu'il comprend des moyens $(28_r)$ recevant les coordonnées $(x_1, x_2)$ des deux points $(M_1, M_2)$ limitant la zone mobile (ZI) de chaque ligne (L) pour en déduire ledit nombre NP des points de la zone mobile et le nombre de bits moyen $\bar{B}$ des mots de point codés transmis (NIV) relatifs à ladite ligne, des moyens de sélection de mouvement $(3_r)$, reliés aux moyens de déduction des nombres NP et $\bar{B}$ $(28_r)$ et analogues à ceux (3) du dispositif de codage conformes à l'une des revendications 1 à 3, pour commander la lecture des mots de point codés à la fréquence des points dans lesdits moyens de décodage $(7_r)$ qui décodent selon ladite loi de quantification prédéterminée les mots codés (NIV) en mots MICD (DP') afin d'en déduire par addition aux mots prédits correspondants par le prédicteur $(4_r)$ les mots MIC des points codés et échantillonnés (PC).

16. Dispositif de décodage conforme à la revendication 15, caractérisé en ce que les moyens de décodage $(7_r)$ comportent un décodeur analogue à celui (7) du dispositif de codage conforme à la revendication 5, qui reçoit les valeurs maximale DMAX et moyenne $\bar{D}$ transmises par le dispositif de codage et qui calcule le nombre NQ de niveaux, ou un décodeur analogue à celui (7') du dispositif de codage conforme à la revendication 8.

17. Dispositif de décodage conforme à la revendication 15 ou 16, caractérisé en ce qu'il comporte des moyens d'interpolation $(8_r)$ analogues à ceux (8) du dispositif de codage conformes à la revendication 10 et éventuellement des moyens de filtrage numérique passe-bas $(9_r)$ interconnectés entre les moyens d'interpolation $(8_r)$ et la mémoire d'image $(1_r)$ analogues à ceux (9) du dispositif de codage conformes à la revendication 12.

### Claims

1. Device for encoding a digital videophone signal at a high given rate, constituted of words which have a predetermined bit number and are representative of consecutive picture elements of a scanned picture, into a PCM encoded signal transmitted on a low rate transmission medium conveying words which are representative of present picture elements, the levels of which have varied relative to those corresponding to the previous picture, said encoding device comprising a picture store (1), means (2) for detecting, by means of comparison of the word difference between two corresponding words to a picture and the previous stored picture with a predetermined threshold (S), the moving of the picture (I) with respect to the previous stored picture (I − 1), a linear predictor (4) whose input is connected to the picture store (1), means (3) controlled by the moving detecting means (2) for wholly or partly selecting the variable picture elements, means (41, 6) receiving in synchronism the picture element words (P) of the videophone signal and the predicted words (PP) from the predictor (4) for encoding, according to a predetermined quantization law, the DPCM encoded words representative wholly or partly of the variable picture elements in order to multiplex the DPCM encoded words in said digital transmission medium, and means (8) for linearly interpolating the words of the other unselected elements of the picture as a function of transmitted words so as to store the picture element words that correspond to the encoded words, and the interpolated words in the picture store (1), characterized in that the number of data bits NB allocated to each line (L) of a picture (I) in the digital transmission medium being constant and the average number of bits $\bar{B}$ allocated to each encoded signal word (NIV) of a line being greater than or equal to a first predetermined integer (three), the moving detecting means (2) produces for each line (L) of a picture (I), the coordinates $x_1$, $x_2$ of the two ledge picture elements $(M_1, M_2)$ defining the moving area (ZI) of the picture (I) with respect to the corresponding line (L) of the previous picture (I − 1) so as to deduce thereby

20

**0 022 713**

the number NP of picture elements in the moving area (ZI) of the line likely to be encoded and said average number of bits $\bar{B}$ and in that the selecting means (3) comprise first and second down-counting means (31, 32) having their counts $C_1$, $C_2$ set to NB and NP at the start of the moving area (ZI) of each line and down-counting the number of bits remaining to be allocated to said line and the number of picture elements remaining likely to be encoded at the line element frequency and means (35) for comparing the counts of said first and second down-counting means (31, 32) to control the writing of the DPCM words (NIV) representative of the picture elements to be transmitted in said encoding means (6) each time $C_1/\bar{B} \geqslant C_2$.

2. Encoding device according to claim 1, characterized in that the moving detecting means (2) further comprises means (277) triggered at the start of each line for counting the picture elements of said line and means (26, 271, 272) for controlling the reading in said counting means (277) when the absolute difference values of a predetermined number of consecutive picture elements of the two corresponding lines to the transmitted picture and the previous picture exceed said threshold (S) and when the differences relative to the consecutive picture elements have the same sign to produce the coordinates $x_1$, $x_2$ of said two ledge picture elements ($M_1$, $M_2$) defining moving area (ZI) of the transmitted line.

3. Encoding device according to claim 1 or 2, characterized in that the moving detecting means (2) comprises comparison means (287) for the average number of bits $\bar{B}$ allocated to each encoded word (NIV) to be equal to a second predetermined integer (six).

4. Encoding device according to any one of claims 1 to 3 in which the DPCM word encoding means (6, 7 ; 6', 7') comprises an encoder (6 ; 6') for transmitting for each selected DPCM picture element word (DP) a $\bar{B}$-bit PCM word (NIV) which is representative of the number of the quantization level of the DPCM word and which is multiplexed in the digital transmission medium, characterized in that the encoding means comprises a decoder (7 ; 7') connected to said encoder (6 ; 6') for producing for each $\bar{B}$-bit level word (NIV), a PCM word (DP') having a predetermined number of bit which is representative of the amplitude of the quantization level of said DPCM word (DP) and which is transmitted through means (42) for adding to the corresponding predicted word (PP), to said interpolating means (8).

5. Encoding device according to claim 4, characterized in that it comprises means (5) for calculating the maximum and average values DMAX, $\bar{D}$ of words (P-PP') in DPCM code for all the picture elements in said moving area (ZI) of a line (L) and in that the encoding means (6, 7) selects a quantization law for each line, such that the quantization levels are equidistributed so half are between $-\bar{D}$ and $+\bar{D}$ and half are between $-$ DMAX and $-\bar{D}$ and between $\bar{D}$ and DMAX and are equal in number (NQ) to $2^{\bar{B}}$, and calculates the quantization level corresponding to this law for each selected DPCM picture element word of said line.

6. Encoding device according to claim 5 comprising delay means, characterized in that the delaying means ($R_1$, $R_2$) delay each line of the videophone signal by a duration of two lines and in that for each line, the moving detecting means (2) calculates $x_1$ and $x_2$ during the reception of said line, the maximum DMAX and average $\bar{D}$ value calculating means (5) performs said calculation during the reception of the following first line and the encoding means (6, 7) encode said selected DPCM words during the reception of the following second line.

7. Encoding device according to claim 5 or 6, characterized in that the maximum DMAX and average $\bar{D}$ value calculating means (5) comprise predicting means (50) that are analogous to the linear predictor (4) and calculate, under the control of the moving detecting means (2), said DPCM encoded words (P-PP') for all the picture elements in said moving area (ZI) of a line based on the words of the corresponding picture elements transmitted by the videophone signal (P) and words of the element pictures, that are determined by the prediction, related to transmitted and possibly delayed words of the videophone signal and to encoded and/or interpolated words stored in the picture store (1).

8. Encoding device according to claim 4 in which the encoder (6') comprises means (60') for storing the level (NIV) numbers of a plurality of quantization laws, characterized in that the decoder (7') comprises means (72') for storing the words (DP') representative of the amplitudes of the levels of said quantization laws and in that said comparing means (35) select a pair of storing means (60' ; 72') relating to a quantization law having $2^{\bar{B}}$ levels as a function of the average bit number $\bar{B}$ and for each selected element picture word (DP) in DPCM code so that the encoder (6') produces a PCM level number word (NIV) by means of the comparison of the selected DPCM element picture word (DP) with the level amplitudes of said quantization law and so that the decoder (7') produces a DPCM word representative of a level (DP') by means of comparison of the produced level number (NIV) with the level numbers of said quantization law.

9. Encoding device according to claim 8 comprising delay means, characterized in that the delaying means ($R_1$) delay each line of the videophone signal by a duration of one line, and in that, for each line, the moving detecting means (2) calculates the coordinates $x_1$, $x_2$ during reception of said line and the encoding means (6') encode said selected DPCM words during the reception of the following line.

10. Encoding device according to any one of claims 4 to 9, characterized in that the linear interpolating means (8) comprise means (87) controlled by said selecting means (3) for distinguishing the transmitted encoded picture element and the subsampling order of the untransmitted and subsampled picture elements relative to the moving area of each line, where the subsampling order is greater than or

21

**0 022 713**

equal to two, and means (80) connected to the output of the adding means (42) for linearly interpolating each subsampled picture element word as a function of its subsampling order and the immediately neighbouring transmitted picture element words.

11. Encoding device according to any one of claims 1 to 10, characterized in that it comprises low-pass digital filtering means (9) interconnected between the linear interpolating means (8) and the input of said picture store (1) for filtering solely the code transmitted and subsampled element picture words.

12. Encoding device according to claim 11, characterized in that the filtering means (9) selectively filter the words of each line by comparing (95) the number NP of elements in the moving area of the line with said constant number NB of bits in terms (90) of the maximum subsampling order likely to be produced by encoding the DPCM words of said line.

13. Encoding device according to any one of claims 1 to 12, characterized in that the incoming videophone signal into the encoding device conveys as a known manner one field out of every two or more and that the picture store is a field store.

14. Encoding device according to any one of claims 1 to 13, in which the number of bits N allocated to each line in the digital transmission medium includes a predetermined number of bits which precedes the number NB of data bits and which is assigned to a line preamble intended to convey at least a line synchronizing PCM word, and possibly words for indicating discriminations regarding the encoding and the prediction in the line, characterized in that the preamble further contains two words representative of the coordinates of the two ledge picture elements which define said moving area of the line.

15. Decoding device intended for receiving through the low rate digital transmission medium the PCM encoded signal from the encoding device according to any one of claims 1 to 14, comprising a picture store ($1_r$), a linear predictor ($4_r$) whose input is connected to the picture store ($1_r$), means ($7_r$) for decoding the encoded picture element words transmitted from the encoding device into encoded words in DPCM code and means ($8_r$) for linearly interpolating the untransmitted picture element words as a function of the PCM transmitted and decoded picture element words to store the PCM interpolated and decoded words in the picture store ($1_r$), characterized in that it comprises means ($28_r$) receiving the coordinates $x_1$, $x_2$ of the two ledge picture elements ($M_1$, $M_2$) defining the moving area (ZI) of each line (L) for thereby deducing said number NP of the picture elements of the moving area and the average number of bits $\bar{B}$ of transmitted and encoded picture element words (NIV) relating to said line, moving area selecting means ($3_r$) connected to the NP and $\bar{B}$ number deducing means ($28_r$) and analogous to those (3) in the encoding device according to any one of claims 1 to 3, for controlling the reading of the encoded picture element words at the element frequency in said decoding means ($7_r$) that decode, as a function of said predetermined quantization law, the encoded words (NIV) into DPCM words (DP') to thereby deduce the PCM encoded and sampled picture element words (PC) by addition to the corresponding predicted words from the predictor ($4_r$).

16. Decoding device according to claim 15, characterized in that the encoding means ($7_r$) comprise a decoder analogous to that (7) in the encoding device according to claim 5, that receives the transmitted maximum DMAX and average $\bar{D}$ values from the encoding device and that calculates the level number NQ, or a decoder analogous to that (7') in the decoding device according to claim 8.

17. Decoding device according to claim 15 or 16, characterized in that it comprises interpolating means ($8_r$) analogous to those (8) in the encoding device according to claim 10, and eventually low-pass digital filtering means ($9_r$) interconnected between the interpolating means ($8_r$) and the picture store ($1_r$) and analogous to those (9) in the encoding device according to claim 12.

**Ansprüche**

1. Vorrichtung zum Kodieren eines numerischen videophonen Signals mit hoher gegebener Bitrate, bestehend aus Wörtern mit vorbestimmter Bitzahl, die aufeinanderfolgende Punkte eines analysierten Bildes repräsentieren, in ein PCM-kodiertes, über einen numerischen Kanal mit niedriger Bitrate übertragenes Signal für die Übermittlung von Wörtern, welche diejenigen Bildpunkte darstellen, deren Pegel sich gegenüber den entsprechenden Pegeln im vorhergehenden Bild geändert haben, wobei die Kodiervorrichtung einen Bildspeicher (1), eine Bewegungsdetektoreinrichtung (2), die die Bewegung des Bildes (I) mit Bezug auf das vorhergehende gespeicherte Bild (I − 1) durch Vergleich des Unterschieds der Wörter zweier entsprechender Punkte in einem Bild und dem vorhergehenden gespeicherten Bild mit einem vorbestimmten Schwellenwert (S) feststellt, eine lineare Voraussageeinheit (4), deren Eingang mit dem Bildspeicher (1) verbunden ist, eine von der Detektoreinrichtung (2) für die Bewegung gesteuerte Auswahleinrichtung (3) für das vollständige oder teilweise Auswählen der veränderlichen Punkte, eine Einrichtung (41, 6), welche die Punktwörter (P) des videophonen Signals und die von der Voraussageeinrichtung (4) vorausgesagten Wörter (PP) synchron empfängt für das nach einem vorbestimmten Quantifikationsgesetz erfolgende Kodieren derjenigen Wörter im DPCM-Kode, welche ganz oder teilweise veränderliche Punkte darstellen, um die Wörter im DPCM-Kode in dem numerischen Kanal zu multiplexen, und eine Interpolationseinrichtung (8) umfaßt, welche die Wörter der anderen nicht ausgewählten Bildpunkte, ausgehend von den übertragenen Wörtern, linear interpoliert, um die den kodierten Wörtern entsprechenden Punktwörter und die interpolierten Wörter in dem Bildspeicher (1) zu

22

speichern, dadurch gekennzeichnet, daß bei konstanter Anzahl der jeder Zeile (L) eines Bildes (I) in dem numerischen Kanal eingeräumten informationstragenden Bits NB und bei einer jedem Wort des kodierten Signals (NIV) einer Zeile eingeräumten mittleren Bitzahl $\bar{B}$, die größer oder gleich einer ersten vorbestimmten ganzen Zahl (drei) ist, die Bewegungsdetektoreinrichtung (2) für jede Zeile (L) eines Bildes (I) die Koordinaten $x_1$, $x_2$ der beider Punkte ($M_1$, $M_2$) erzeugt, welche die veränderliche Zone (ZI) des Bildes (I) mit Bezug auf die entsprechende Zeile (L) des vorhergehenden Bildes (I − 1) begrenzen, um daraus die Anzahl NP der für die Kodierung geeigneten Punkte der veränderlichen Zone (ZI) und die mittlere Bitzahl $\bar{B}$ abzuleiten, und daß die Auswahleinrichtung (2) eine erste und zweite Zähleinrichtung (31, 32), deren Zählstände $C_1$, $C_2$ am Anfang der veränderlichen Zone (ZI) jeder Zeile bei NB und NP beginnen und mit der Frequenz der Zeilenpunkte die Anzahl der restlichen, der Zeile einzuräumenden Bits und die Anzahl der restlichen für die Kodierung geeigneten Punkte abwärtszählen, sowie einen Komparator (35) für die Zählstände der ersten und zweiten Zähleinrichtung (31, 32) umfaßt, um in dem Kodierer (6) das Schreiben der die zu übertragenden Punkte darstellenden DPCM Wörter (NIV) zu steuern, wenn $C_1/\bar{B} \geqslant C_2$ ist.

2. Kodiervorrichtung nach Anspruch 1, dadurch gekennzeichnet, daß die Bewegungsdetektoreinrichtung (2) weiterhin einen am Anfang jeder Zeile einsetzender Zähler (277), der die Punkte dieser Zeile zählt, und Steuereinrichtungen (26, 271, 272) für das Lesen des Zählers (277) aufweist, wenn die Absolutbeträge der Differenz einer vorbestimmten Anzahl aufeinanderfolgender Punkte in zwei Zeilen, die dem übertragenen und dem vorhergehenden Bild entsprechen, oberhalb des Schwellenwertes (S) liegen und wenn die Differenzen bezüglich der aufeinanderfolgenden Punkte dasselbe Vorzeichen besitzen, um die Koordinaten $x_1$, $x_2$ der beiden die veränderliche Zone (ZI) in der übertragenen Zeile begrenzenden Punkte ($M_1$, $M_2$) zu erzeugen.

3. Kodiervorrichtung nach einem der Ansprüche 1 oder 2, dadurch gekennzeichnet, daß die Bewegungsdetektoreinrichtung (2) einen Komparator (287) umfaßt, damit die jedem kodierten Wort (NIV) eingeräumte Bitzahl $\bar{B}$ kleiner oder gleich groß ist wie eine zweite vorbestimmte ganze Zahl (sechs).

4. Kodiervorrichtung nach einem der Ansprüche 1 bis 3, in welche die Kodiereinrichtung für MICD-Wörter (6, 7 ; 6', 7') einen Kodierer (6 ; 6') umfaßt, um relativ zu jedem ausgewählten DPCM-Punktwort (DP) ein MIC-Wort mit $\bar{B}$ Bits (NIV) zu übertragen, das die Anzahl der Quantifikationspegel des DPCM-Wortes darstellt und das in den numerischen Kanal gemultiplext wird, dadurch gekennzeichnet, daß die Kodiereinrichtung ferner einen mit dem Kodierer (6 ; 6') verbundenen Dekodierer (7 ; 7') umfaßt, um für jedes Pegelwort mit $\bar{B}$ Bits (NIV) ein PCM-Wort mit vorbestimmter Bitzahl (DP') zu erzeugen, das die Amplitude des Quantifikationspegels des DPCM-Wortes (DP) darstellt und das über eine Additionseinrichtung (42) zu dem vorhergesagten entsprechenden Wort (PP) in die Interpolationseinrichtung (8) übertragen wird.

5. Kodiervorrichtung nach Anspruch 4, dadurch gekennzeichnet, daß sie einen Rechner (5) für den Maximalwert DMAX und den Mittelwert $\bar{D}$ der DPCM-Kode-Wörter (P-PP') aller Punkte der veränderlichen Zone (ZI) einer Zeile (L) umfaßt und daß die Kodiereinrichtungen (6, 7) für jede Zeile ein Quantifikationsgesetz so auswählen, daß die Quantifikationspegel zur Hälfte zwischen − $\bar{D}$ und + $\bar{D}$ und zur Hälfte zwischen − DMAX und − $\bar{D}$ und zwischen $\bar{D}$ und DMAX gleich verteilt sind und ihre Zahl (NQ) gleich $2^{\bar{B}}$ ist, und den diesem Gesetz entsprechenden Quantifikationspegel für jedes ausgewählte DPCM-Punktwort der Zeile berechnen.

6. Kodiervorrichtung nach Anspruch 5 mit einer Verzögerungseinrichtung, dadurch gekennzeichnet, daß die Verzögerungseinrichtung ($R_1$, $R_2$) jede Zeile des videophonen Signals um die Dauer zweier Zeilen verzögert und daß für jede Zeile die Bewegungsdetektoreinrichtung (2) $x_1$ und $x_2$ während des Empfangs der Zeile berechnet, der Rechner (5) für die Berechnung des Maximalwerts DMAX und des Mittelwerts $\bar{D}$ die Berechnung während des Empfangs der ersten folgenden Zeile bewirkt und die Kodiereinrichtung (6, 7) die ausgewählten DPCM-Wörter während des Empfangs der zweiten folgenden Zeile kodiert.

7. Kodiervorrichtung nach Anspruch 5 oder 6, dadurch gekennzeichnet, daß der Rechner (5) für die Berechnung des Maximalwertes DMAX und des Mittelwertes $\bar{D}$ eine Vorhersageeinrichtung (50) umfaßt, die zu der linearen Voraussageeinrichtung (4) analog ist und die unter der Steuerung der Bewegungsdetektoreinrichtung (2) die Wörter im DPCM-Kode (P-PP') für alle Punkte der veränderlichen Zone (ZI) einer Zeile berechnet, ausgehend von den entsprechenden, durch das videophone Signal übertragenen Punktwörtern (P), sowie von den Punktwörtern, die durch die Voraussage bezüglich der übertragenen und eventuell verzögerten Wörter des videophonen Signals bestimmt sind, sowie von den kodierten und/oder interpolierten, in dem Bildspeicher (1) gespeicherten Wörtern.

8. Kodiervorrichtung nach Anspruch 4, in welcher der Kodierer (6') Speicher (60') für das Speichern der Pegelzahlen (NIV) mehrerer Quantifikationsgesetze umfaßt, dadurch gekennzeichnet, daß der Dekodierer (7') Speicher (72') für das Speichern der die Pegelamplituden der Quantifikationsgesetze darstellenden Wörter (DP') umfaßt und daß der Komparator (35) in Abhängigkeit von der mittleren Bitzahl $\bar{B}$ und für jedes ausgewählte DPCM-kodierte Punktwort (DP) zwei Speicher (60', 72') mit Bezug auf ein Quantifikationsgesetz mit $2^{\bar{B}}$ Pegeln auswählt, damit der Kodierer (6') ein PCM-Wort für die Pegelzahl (NIV) durch Vergleich des gewählten DPCM-Punktwortes (DP) mit den Pegelamplituden des Quantifikationsgesetzes erzeugt und damit der Dekodierer (7') ein einen Pegel darstellendes DPCM-Wort (DP') durch Vergleich der erzeugten Pegelzahl (NIV) mit den Pegelzahlen des Quantifikationsgesetzes erzeugt.

9. Kodiervorrichtung nach Anspruch 8, mit einer Verzögerungseinrichtung, dadurch gekennzeichnet, daß die Verzögerungseinrichtung (R₁) jede Zeile des videophonen Signals um die Dauer einer Zeile verzögert und daß für jede Zeile die Bewegungsdetektoreinrichtung (2) die Koordinatoren $x_1$, $x_2$ während des Empfangs der Zeile berechnet und der Kodierer (6') die ausgewählten DPCM-Wörter während des Empfangs der folgenden Zeile kodiert.

10. Kodiervorrichtung nach einem der Ansprüche 4 bis 9, dadurch gekennzeichnet, daß die lineare Interpolationseinrichtung (8) eine von der Auswahleinrichtung (3) gesteuerte Einrichtung (87) für die Unterscheidung der übertragenen kodierten Punkte und der Zwischenabtastfolge der nicht übertragenen, zwischenabgetasteten Punkte in der veränderlichen Zone jeder Zeile umfaßt, wobei die Zwischenabtastfolge größer oder gleich zwei sein kann, und eine mit dem Ausgang der Additionseinrichtung (42) verbundene Einrichtung (80) für das lineare Interpolieren jedes zwischenabgetasteten Punktwortes als Funktion einer Zwischenabtastfolge und der unmittelbar benachbarten übertragenen Punktwörter umfaßt.

11. Kodiervorrichtung nach einem der Ansprüche 1 bis 10, dadurch gekennzeichnet, daß sie einen zwischen die lineare Interpolationseinrichtung (8) und den Eingang des Bildspeichers (1) geschalteten numerischen Tiefpaßfilter (9) für das filtern nur der übertragenen kodierten und zwischenabgetasteten Punktwörter umfaßt.

12. Kodiervorrichtung nach Anspruch 11, dadurch gekennzeichnet, daß der Filter (9) selektiv die Wörter jeder Zeile durch Vergleich (95) der Anzahl (NP) der Punkte in der veränderlichen Zone der Zeile mit der konstanten Bitzahl NB filtert, gemäß Funktion (90) der maximal für die Erzeugung durch die Kodierung der DPCM-Wörter der Zeile geeigneten Zwischentastabfolge.

13. Kodiervorrichtung nach einem der Ansprüche 1 bis 12, dadurch gekennzeichnet, daß das in die Kodiervorrichtung eintretende videophone Signal in bekannter Weise ein Halbbild von zwei oder mehreren übermittelt und daß der Bildspeicher ein Halbbildspeicher ist.

14. Kodiervorrichtung nach einem der Ansprüche 1 bis 13, in welcher die Anzahl N der jeder Zeile in dem numerischen Kanal eingeräumten Bits eine vorherbestimmte Anzahl von den informationstragenden Bits NB vorausgehenden Bits umfaßt, die einem Vorspann für die Übermittlung mindestens eines Zeilensynchronisations-MIC-Wortes und eventuell von Wörtern für die Anzeige bestimmter Unterscheidungen bezüglich der Kodierung und der Voraussage der Zeile zugewiesen sind, dadurch gekennzeichnet, daß der Vorspann außerdem zwei Wörter enthält, welche die Koordinaten der die veränderliche Zone in der Zeile begrenzenden Punkte darstellen.

15. Dekodiervorrichtung, die über den numerischen Kanal mit niedriger Bitrate das von der Kodiervorrichtung nach einem der Ansprüche 1 bis 14 kodierte PCM-Signal empfängt, mit einem Bildspeicher (1ᵣ), einer linearen Vorhersageeinrichtung (4ᵣ), deren Eingang mit dem Bildspeicher (1ᵣ) verbunden ist, einer Dekodiereinrichtung (7ᵣ) für das Dekodieren der von der Kodiervorrichtung übertragenen kodierten Punktwörter in im DPCM-Kode kodierte Wörter, und mit einer Interpolationseinrichtung (8ᵣ) für das lineare Interpolieren der nicht übertragenen Punktwörter, ausgehend von den übertragenen und dekodierten PCM-Punktwörtern, um die dekodierten und interpolierten PCM-Wörter in dem Bildspeicher (1ᵣ) zu speichern, dadurch gekennzeichnet, daß sie eine Einheit (28ᵣ) umfaßt, die die Koordinaten $x_1$, $x_2$ der beiden die veränderliche Zone (ZI) in jeder Zeile (L) begrenzenden Punkte aufnimmt, um daraus die Anzahl NP der Punkte der veränderlichen Zone und die mittlere Bitzahl $\bar{B}$ der kodierten übertragenen Punktwörter (NIV) bezüglich dieser Zeile abzuleiten, und daß sie eine Bewegungsauswahleinrichtung (3ᵣ) umfaßt, die mit der Einheit (28ᵣ) für die Ableitung der Zahlen NP und $\bar{B}$ verbunden und analog zu der Auswahleinrichtung (3) der Kodiervorrichtung nach einem der Ansprüche 1 bis 3 ist, um das Lesen der kodierten Punktwörter mit der Frequenz der Punkte in der Dekodiereinrichtung (7ᵣ) zu steuern, die nach dem vorbestimmten Quantifikationsgesetz die kodierten Wörter (NIV) in DPCM-Wörter (DP') dekodiert, um aus ihnen durch Addition zu den entsprechenden von der Vorhersageeinrichtung (4ᵣ) vorhergesagten Wörtern die PCM-Wörter der kodierten und abgetasteten Punkte (PC) abzuleiten.

16. Dekodiervorrichtung nach Anspruch 15, dadurch gekennzeichnet, daß die Dekodiereinrichtung (7ᵣ) einen zu dem Dekodierer (7) der Kodiervorrichtung gemäß Anspruch 5 analogen Dekodierer enthält, die den von der Kodiervorrichtung übertragenen Maximalwert DMAX und Mittelwert $\bar{D}$ empfängt und die die Zahl NQ der Pegel berechnet, oder einen zu dem Dekodierer (7') der Kodiervorrichtung gemäß Anspruch 8 analogen Dekodierer enthält.

17. Dekodiervorrichtung nach Anspruch 15 oder 16, dadurch gekennzeichnet, daß sie eine zu der Interpolationseinrichtung (8) der Kodiervorrichtung gemäß Anspruch 10 analoge Interpolationseinrichtung (8ᵣ) enthält sowie eventuell einen zwischen die Interpolationseinrichtung (8ᵣ) und den Bildspeicher (1ᵣ) geschalteten, zu dem Filter (9) der Kodiervorrichtung nach Anspruch 12 analogen numerischen Tiefpaßfilter (9ᵣ) umfaßt.

# FIG.1

# FIG.4

# FIG.2

DISPOSITIF DE CODAGE DE LA PARTIE EMISSION

FIG.3 CCT DE DETECTION DE MOUVEMENT 2

UNITE ARITHMETIQUE

FIG.5  *UNITÉ ARITHMÉTIQUE 5*

$510 \sim x_1$ de 281 (Fig.3)

$520 \sim x_2$ de 282 (Fig.3)

vers
66bc (Fig.6)
et 76bc (Fig.7)

51 ∿ DÉCOMPTEUR

52 ∿ DÉCOMPTEUR

522

511 ∿

521 ∿

590 ∿

59

56

560

50

507

COMPARATEUR

$\tau$

D/MAX-$\bar{D}$

$P(I,L)$

502

+

58

−

503

500

$\tau$

$(P-1)(I,L)$

CCT
DE
PRÉDICTION

$PP'(I,L)$

53

550 551

504

$(P+1)(I,L-1)$

−

$\Sigma$

57

$\bar{D}$

2L

505

$P(I,L-1)$

$|P(I,L)-PP'(I,L)|$

+

+

NP

de 285 (Fig.3)

570

506

$\tau$

501

55

vers 640,641,66a (Fig.6)
et 76a,77b,770 (Fig.7)

$R_1$

$R_2$

MP de 43 (Fig.2)

Sync. lignes

E

$P'(I-1,L)$ et $(P-1)'(I,L-1)$ de 12 (Fig.2)

0 022 713

FIG.6

FIG.7

de 63 (FIG.6)

DECODEUR

7

Vers 42(FIG.2)

0 022 713

de 5(FIG.5)

FIG.8

FIG.9

**0 022 713**

**FIG.10**

CIRCUIT D'INTERPOLATION LINÉAIRE 8

PINT (I,L) Vers 900 (FIG.11)

8

# FIG.12

codé et transmis

codé et transmis

codé et transmis

A   B   C   D   E   F

Sous-échantillonné et interpolé

Sous-échantillonnés et interpolés

$$B = \frac{A+C}{2} \qquad D = \frac{3C+F}{4} \qquad E = \frac{C+3F}{4}$$

# FIG.11

CIRCUIT DE FILTRAGE SPATIAL CONDITIONNEL 9

MB/3

951

950

COMPARATEUR NP > MB/3

$96_1$

95

NP de 285 (FIG.3)

COMPARATEUR NP > 2 MB/3

952

2MB/3

$96_2$   97

90

PINT(I,L) de 820 (FIG.10)   900

$911 \sim \tau$

$\tau \dashv 912$

$92_3$   $93_3$

$\div 2$

$92_2$

$93_2 \sim \div 2$

P'(I,L)

$P'(I,L)$

$P^2(I,L)$

$P^3(I,L)$

$94_1$

$94_3$

sous-échantillonnage d'ordre 3

$94_2$

sous-échantillonnage d'ordre 2

98

$P^x(I,L)$   Vers 13 (FIG.2)

FIG.13

DISPOSITIF DE DÉCODAGE
DE LA PARTIE RÉCEPTION

0 022 713